(19) Europäisches Patentamt
European Patent Office
Office européen des brevets

(11) **EP 3 336 937 B1**

(12) **EUROPEAN PATENT SPECIFICATION**

(45) Date of publication and mention
of the grant of the patent:
**05.02.2020   Bulletin 2020/06**

(51) Int Cl.:
*H01M 4/134* (2010.01)   *H02J 7/00* (2006.01)

(21) Application number: **17206661.5**

(22) Date of filing: **12.12.2017**

(54) **ELECTRIC VEHICLES WITH ADAPTIVE FAST-CHARGING, UTILIZING SUPERCAPACITOR-EMULATING BATTERIES**

ELEKTROFAHRZEUGE MIT ADAPTIVER SCHNELLLADUNG UNTER VERWENDUNG VON SUPERKONDENSATOR-EMULIERENDEN BATTERIEN

VÉHICULES ÉLECTRIQUES À CHARGEMENT RAPIDE ADAPTATIF AU MOYEN DE BATTERIES ÉMULANT DES SUPERCONDENSATEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2016   US 201662434432 P
28.04.2017   US 201715582066
13.10.2017   US 201715783586**

(43) Date of publication of application:
**20.06.2018   Bulletin 2018/25**

(73) Proprietor: **StoreDot Ltd.
Herzeliya 4672503 (IL)**

(72) Inventor: **Aronov, Daniel
Netanya 4266107 (IL)**

(74) Representative: **Pearl Cohen Zedek Latzer Baratz UK LLP
The Gridiron Building
One Pancras Square
London N1C 4AG (GB)**

(56) References cited:
**WO-A1-2016/031082      US-A1- 2013 059 174
US-A1- 2015 046 110      US-A1- 2016 264 124**

**Description**

BACKGROUND OF THE INVENTION

1. TECHNICAL FIELD

The present invention relates to the field of power sources such as but not limited to batteries and capacitors. Such power sources are used for example in electric vehicles.

2. DISCUSSION OF RELATED ART

Supercapacitors, also known as ultracapacitors, are capacitors with high capacitance which are used to provide electric energy bursts, e.g. short term high energy pulses. In these applications, supercapacitors are superior to batteries in their ability to deliver much more charge at a shorter time and in their ability to undergo many more charging and discharging cycles. The superior performance in these respects is due to the fact that the operation of supercapacitors is based on electrostatic energy storage while the operation of batteries is based on electrochemical redox reactions, which are generally slower and cause more electrode degradation over time. Supercapacitors are designed in various ways, such as double layer supercapacitors (e.g., electric double-layer capacitors (EDLC)), pseudocapacitors, hybrid capacitors etc.

There is a direct relation between the supercapacitor's physical size to the charge it can store and the energy it can deliver. Typical supercapacitors range from 0.001Wh of stored energy for dimensions in the scale (order of magnitude) of 1cm, weight of 1gr and maximal current of 0.5-1A (rated capacitance IF) to 4Wh of stored energy for dimensions in the scale (order of magnitude) of 10cm, weight of 500gr and maximal current reaching 2000A with continuous currents reaching 200A (rated capacitance 3000F). Larger supercapacitors are made of multiple supercapacitor units to store and deliver larger energy ratings.

US2016/264124 discloses an electronic control unit which sets a target value of a charging amount of the electrical storage device and increases the charging amount to the target value during travelling on the freeway.

The electronic control unit computes a first travel cost being cost per unit travel distance of fuel used when the EV travel is made by using the electric power charged in the electrical storage device at a time when the HV travel is made on the freeway, and the second travel cost being cost per unit travel distance of the electric power used when the EV travel is made by using the electric power charged in the electrical storage device by the charging mechanism at the destination. The electronic control unit sets the target value on the basis of a comparison result between the first travel cost and the second travel cost. US2013/059174 discloses a lithium super-battery cell comprising: (a) a cathode comprising a cathode active material having a surface area to capture or store lithium thereon, wherein the cathode active material is not a functionalized material and does not bear a functional group; (b) an anode comprising an anode current collector; (c) a porous separator disposed between the two electrodes; (d) a lithium-containing electrolyte in physical contact with the two electrodes, wherein the cathode active material has a specific surface area of no less than 100 m2/g being in direct physical contact with the electrolyte to receive lithium ions therefrom or to provide lithium ions thereto; and (e) a lithium source implemented at one or both of the two electrodes prior to a first charge or a first discharge cycle of the cell.

WO2016/031082 A1 discloses a lithium ion battery with anode active material comprising Si particles within a shell material.

SUMMARY OF THE INVENTION

The following is a simplified summary providing an initial understanding of the invention. The summary does not necessarily identify key elements nor limit the scope of the invention, but merely serves as an introduction to the following description.

One aspect of the present invention provides a device comprising control circuitry and a fast-charging lithium ion battery, wherein the modified fast-charging lithium ion battery comprises at least one anode having Si, Ge and/or Sn -based anode active material, at least one cathode (87) and a carbonate-based electrolyte with lithium electrolyte salt(s). The modified fast-charging lithium ion battery is designed to operate at 5C and is controlled by the control circuity to around a working point defined between 60-80% lithiation of the Si, Ge and/or Sn -based anode active material, and within an operation range of 5% at most around the working point, wherein the percentage of lithiation corresponds to a state of charge "SOC" of the modified fast-charging lithium ion battery and wherein the control circuitry maintains the state of charge (SOC) of the modified fast-charging lithium ion battery within the operation range and around the working point and the anode active material is configured to restrict the operation of the modified fast-charging lithium ion battery to within the operation range around the working point, an anode of the modified fast-charging lithium ion battery comprises mechanical barriers configured to prevent full expansion of the anode material upon lithiation, and correspondingly the modified fast-charging lithium ion battery is not operable at SOC values above the operation range around the working point; and

the anode material comprises composite anode material particles having shell structures, wherein the shell structures are smaller than a full expansion volume of cores of the composite anode material particles. A device according to some embodiments of the invention may be used in many kinds of applications including but not limited to power trains for electric vehcles.

A device or method according to some embodiments of the invention may include any one or more of the following features either alone or in any combination, described further herein with reference to the drawings.

The anode active material may be configured to enable operation of the fast-charging lithium ion battery only around the working point and within the operation range.

An anode of the fast-charging lithium ion battery may comprise mechanical barriers configured to prevent full expansion of the anode material upon lithiation. The mechanical barriers may be configured to enable 80% or less of the full expansion of the anode material upon lithiation.

The anode material may comprise composite anode material particles having shell structures which are smaller than a full expansion volume of cores of the composite anode material particles.

A cathode of the fast-charging lithium ion battery may have a capacity of 80% or less than the anode.

The device may be configured to operate at a voltage level of at least 3V, and have a leakage current smaller than 0.1% of a respective maximal continuous current.

Given specifications of a supercapacitor may comprise at least one dimension of the supercapacitor, and a method according to some embodiments of the invention may comprise configuring a charging/discharging rate of the fast-charging battery to provide a given operation current.

The given specification may comprise an operation current of the supercapacitor, and a method may comprise configuring at least one of: at least one dimension and a charging/discharging rate the fast-charging battery to provide the given operation current.

A method according to some embodiments of the invention may comprise configuring control circuitry of the fast-charging battery to operate the fast-charging battery only within the partial operation range.

The fast-charging battery may be a lithium ion battery having a metalloid-based anode comprising Si, Ge and/or Sn -based anode active material.

The fast-charging battery may be a lithium ion battery configured to operate at 50C charging rate.

A method according to some embodiments of the invention may comprise selecting the working point within an optimal operation window of the fast-charging battery as a highly lithiated point to reduce relative expansion of anode material particles during operation.

A method according to some embodiments of the inventon may comprise optimizing an anode configuration of the fast-charging battery under assumption of operation only around the selected working point and within the partial operation range.

Some embodiments of the invention may provide a fast-charging lithium ion battery having Si, Ge and/or Sn -based anode active material and operating at least at 5C charging rate, only within an operation range of 5% at most around a working point of between 60-80% lithiation of the Si, Ge and/or Sn -based anode active material.

The fast-charging lithium ion battery may be modified or controlled to enable operation thereof only around the working point and within the operation range, wherein an anode of the battery comprises mechanical barriers configured to prevent full expansion of the anode material upon lithiation. The the mechanical barriers may be configured to enable 80% or less of the full expansion of the anode material upon lithiation. The anode material may comprise composite anode material particles having shell structures which are smaller than a full expansion volume of cores of the composite anode material particles.

In another aspect the invention may provide an electric vehicle (EV) power train comprising: a lithium ion module (FC), configured to deliver power to the EV, a supercapacitor-emulating fast-charging lithium ion module (SCeFC), configured to receive power and to deliver power to the EV and/or to the FC, wherein both the FC and the SCeFC have anodes based on a same anode active material, and wherein the SCeFC is configured to operate at a maximal charging rate of 5C and within an operation range of 5% at most around a working point of between 60-80% lithiation of the anode active material; and a control unit configured to: maintain a state of charge (SoC) of the SCeFC within the operation range around the working point, manage the FC and the SCeFC with respect to power delivery to and from the EV, respectively, and manage power delivery from the SCeFC to the FC and/or to the EV according to specified criteria.

In another aspect the invention may provide a method comprising: configuring a power train for an electric vehicle (EV) from a fast-charging lithium ion module (FC), configured to deliver power to the EV, and a supercapacitor-emulating fast-charging lithium ion module (SCeFC), configured to receive power and to deliver power to the EV and/or to the FC, wherein both the FC and the SCeFC have anodes based on a same anode active material, and wherein the SCeFC is configured to operate at a maximal charging rate of 5C and within an operation range of 5% at most around a working point of between 60-80% lithiation of the anode active material, operating the SCeFC battery to maintain a state of charge (SoC) of the SCeFC within the operation range around the working point, managing the FC and the SCeFC with respect to power delivery to and from the EV, respectively, and managing power delivery from the SCeFC to the FC and/or to the EV according to specified criteria.

At least a part of the SCeFC may be allocated to complement operation of the FC when the FC experiences reduced capacity, wherein the allocation is carried out by increasing the operation range of the SCeFC.

As with other embodiments of the invention, the anode active material may be configured to enable operation of the SCeFC only around the working point and within the operation range.

The working point may be selected within an optimal operation window of the SCeFC as a highly lithiated point to reduce relative expansion of anode material particles during operation.

Embodiments of the invention may also provide a computer program product comprising a transitory or non-transitory computer readable medium, for example a storage medium, having computer readable program embodied therewith which may be implemented in a computing system to control operation of any of the power trains described herein. The control may operate the SCeFC battery to maintain a state of charge (SoC) of the SCeFC within the operation range around the working point, manage the FC and the SCeFC with respect to power delivery to and from the EV, respectively, and manage power delivery from the SCeFC to the FC and/or to the EV according to specified criteria.

These, additional, and/or other aspects and/or advantages of the present invention are set forth in the detailed description which follows; possibly inferable from the detailed description; and/or learnable by practice of the present invention.

BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:

**Figure 1A** is a schematic illustration of a device which emulates a supercapacitor using a fast-charging battery, according to some embodiments of the invention.

**Figure 1B** is a schematic illustration of supercapacitor-emulating fast-charging battery and its configuration, according to some embodiments of the invention.

**Figure 2** is a schematic illustration of a power train of an electric vehicle, according to some embodiments of the invention.

**Figures 3A-3C** are schematic illustrations of system configurations, operation algorithms and examples of the power train of the electric vehicle, according to some embodiments of the invention.

**Figure 4** is a schematic illustration of the power train of the electric vehicle, according to some embodiments of the invention.

**Figures 5A-5C** are schematic illustrations of system configurations, operation algorithms and examples of power trains of electric vehicles, according to some embodiments of the invention.

**Figure 6A** illustrates schematically a flowchart of an algorithm for optimizing module sizes of FC and SCeFC of the power train in the vehicle, according to some embodiments of the invention.

**Figure 6B** is a schematic illustration of power trains and operation modes thereof, according to some embodiments of the invention.

**Figure 7A** is a schematic illustration of power trains having FC and SCeFC modules, respectively, implemented in a single battery, according to some embodiments of the invention.

**Figure 7B** is a schematic illustration of power supply profiles, according to some embodiments of the invention.

**Figure 7C** is a conceptual illustration of power supply and demand allocation by controls between the SCeFC and the FC, according to some embodiments of the invention.

**Figure 8** is a schematic flowchart illustrating a method of emulating a supercapacitor by a fast-charging battery, according to some embodiments of the invention.

**Figure 9A** is a schematic illustration of various anode configurations, according to some embodiments of the invention.

**Figure 9B** is a schematic illustration of partial lithiation and mechanical barriers for lithiation of the anode material particles, according to some embodiments of the invention.

**Figures 10A-10C** are schematic illustrations relating to the selection of working point and narrow operation range, according to some embodiments of the invention.

DETAILED DESCRIPTION OF THE INVENTION

In the following description, various aspects of the present invention are described. For purposes of explanation, specific configurations and details are set forth in order to provide a thorough understanding of the present invention. However, it will also be apparent to one skilled in the art that the present invention may be practiced without the specific details presented herein. Furthermore, well known features may have been omitted or simplified in order not to obscure the present invention. With specific reference to the drawings, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein is for the purpose of description and should not be regarded as limiting.

Unless specifically stated otherwise, as apparent from the following discussions, it is appreciated that throughout the specification discussions utilizing terms such as "processing", "computing", "calculating", "determining", "enhancing", "deriving", "monitoring", "managing" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

Electric vehicles (EVs), power trains and control units and methods are provided. Power trains may comprise a fast-charging lithium ion battery module (FC), configured to deliver power to the electric vehicle, a supercapacitor-emulating fast-charging lithium ion battery module (SCeFC), configured to receive power (e.g., from charging and/or EV regenerative braking) and deliver power to the FC and/or to the EV, and a control unit. The FC may be the main source of power to the EV. For example it may be the primary source, whereby the SCeFC is only used when the FC is depleted. Both the FC and the SCeFC may have anodes based on the same anode active material. In other words the major ingredient of the active material of the anodes for both the FC and the SCeFC may be the same. For example the anodes of both the FC and the SCeFC may comprise Si, Ge, Sn and/or lithium titanate -based anode active material. The use of the same anode active material may provide a significant advantage with respect to production and maintenance of a power train. The SCeFC may be configured to operate at high rates and may be configured to operate within a limited operation range of state of charge (SoC), for example to operate at a maximal charging and/or discharging rate of 5C, or possibly 10C or 50 and/or within an operation range of 5% at most around a working point of between 60-80% lithiation of the anode active material. The operation range of state of charge may be maintained by the control unit, which may be further configured to manage the FC and the SCeFC with respect to power delivery to and from the EV, respectively, and manage power delivery from the SCeFC to the FC. This management may be for example according to specified criteria, e.g. that minimizes a depth of discharge and/or a number of cycles of the FC. Modules FC and SCeFC may be implemented as separate batteries or as a single battery in which internal modules and/or cell stack are operatively controlled as FC or as SCeFC according to the principles disclosed herein. Any of the following embodiments may be implemented as separate battery(ies) and/or as one or more battery modules.

Methods and supercapacitor-emulating fast-charging batteries are also provided. Methods comprise configuring a fast-charging battery to emulate a supercapacitor with given specifications (e.g., to provide the SCeFC) for example by operating the fast-charging battery only within a partial operation range which is defined according to the given specifications of the supercapacitor and is smaller than 20%, possibly smaller than 5% or 1%, of a full operation range of the fast-charging battery. The full operation range may be defined as any of (i) 0-100% state of charge (SoC) of the battery, (ii) potential 0-100% state of charge (SoC) of the anode material from which the battery is prepared (in case there are mechanical structures that limit the lithiation of the anode active material, as discussed below), (iii) the nominal capacity of the battery and/or equivalent definitions. Devices are provided, which comprise control circuitry and a fast-charging lithium ion battery having Si (silicon), Ge (germanium), Sn (tin) and/or LTO (lithium titanate) -based anode active material and may be designed to operate at 5C at least and/or within a range of 5% at most around a working point of between 60-80% lithiation of the Si, Ge, Sn and/or LTO -based anode active material. The control circuitry may be configured to maintain the SoC of the battery within the operation range around the working point.

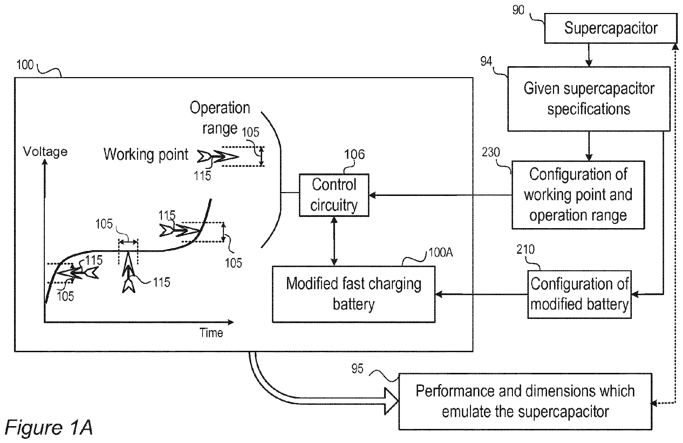

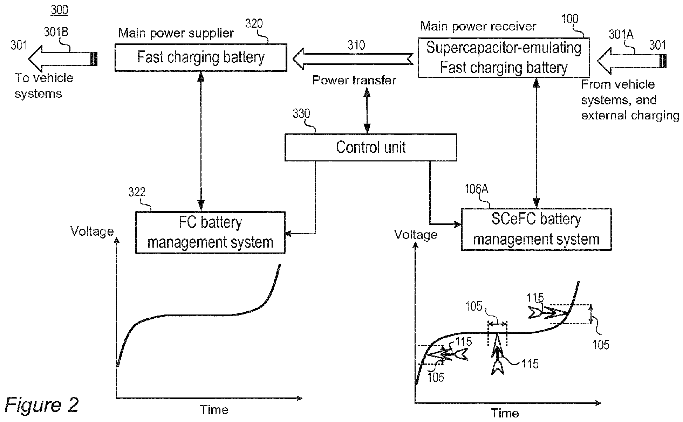

**Figure 1A** is a schematic illustration of a device **100** which emulates a supercapacitor **90** using a modified fast-charging battery **100A**, according to some embodiments of the invention. Other embodiments of the invention may use an unmodified fast-charging battery which is configured or controlled to operate according to particular operating constraints. Device **100** may comprise modified fast-charging battery **100A** configured to enable fast charging as explained below, and/or to operate within a narrow operation range **105** around a working point **115** for example as configured in configuration stages **210** disclosed below. Modified fast-charging battery **100A** may be optimized to operate as part of device **100** and with respect to narrow operation range **105** and working point **115,** as disclosed below. Device **100** may be used in power trains for EVs as SCeFC **100,** described below (see e.g., **Figure 2**).

Device **100** may further comprise a control unit **106** configured to operate modified fast-charging battery **100A** within a narrow operation range **105** around working point **115** to provide an output **95** which is equivalent to the output expected from corresponding supercapacitor **90** and/or according to given supercapacitor specifications **94,** e.g., with respect to performance (e.g., currents, cycle life, capacity, etc.) and dimensions (e.g., size, weight) of corresponding supercapacitor **90.** Device **100** may be designed to emulate any given supercapacitor **90** and/or any given supercapacitor specifications **94,** as explained below. Different configurations of device **100** may be used to emulate corresponding different supercapacitors **90.**

Control unit **106** may comprise various electronic components (e.g., diodes, switches, transistors etc.) as circuit elements configured to determine working point **115** and prevent charging and/or discharging modified fast-charging battery **100A** outside a specified voltage range corresponding to operating range **105.** For example, control circuitry **106** may comprise circuit elements (e.g., diodes, switches, transistors etc.) configured to prevent a charging current from reaching modified fast-charging battery **100A** except in operation range **105** around working point **115.**

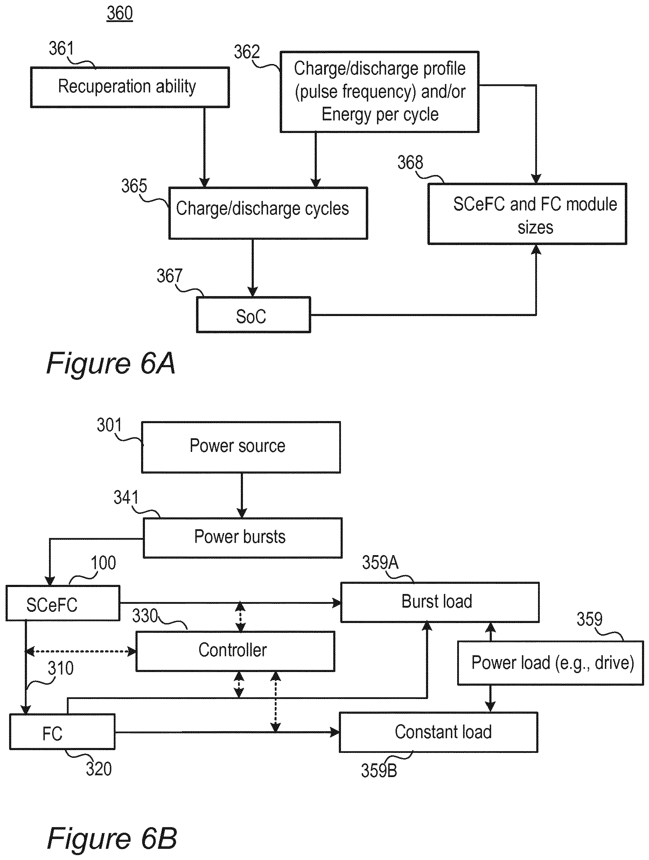

Control circuit **106** may be configured to operate modified fast-charging battery **100A** at a narrow operation range **105** around working point **115,** according to configuration parameters **230** such as the charging/discharging rate, dimension and other performance parameters of fast charging battery **100A** determined with respect to the emulated supercapacitor **94,** as disclosed below. In certain embodiments, the charging/discharging rate may be adjusted by selecting the working point at a specific SoC with respect to a given C-rate of the battery (see also **Figure 6A**).

It is emphasized that the disclosed invention, in some embodiments, enables configuration of appropriate modified fast-charging battery **100A** and/or device **100** for any given supercapacitor specifications, by configuring the dimensions of modified fast-charging battery **100A** and the performance of modified fast-charging battery **100A** and/or device **100** correspondingly.

The inventors have found out that for any given supercapacitor specifications, a corresponding modified fast-charging battery **100A** and/or device **100** may indeed be designed to emulate the given supercapacitor. Examples for given supercapacitor specifications include, e.g., any of: (i) rated capacitance 1F, stored energy 0.001Wh, volume of ca. 1cm$^3$, weight of 1gr and maximal continuous current of 0.5-1A (depending on conditions); (ii) rated capacitance 10F, stored energy 0.01Wh, volume of 3cm$^2$, weight of 3-4gr and maximal continuous current of 2-4A (depending on conditions); (iii) rated capacitance 100F, stored energy 0.1Wh, volume of ca. 10cm$^3$, weight of 20-25gr and maximal continuous current of 5-15A (depending on conditions); (iv) rated capacitance 300-600F, stored energy 0.3-0.8Wh, volume of ca. 20-30cm$^3$, weight of 50-150gr and maximal continuous current of 20-90A (depending on conditions); (v) rated capacitance 1500F, stored energy 1.5Wh, volume of ca. 50-60cm$^3$, weight of ca. 300gr and maximal continuous current of 80-150A (depending on conditions); (vi) rated capacitance 3000-4000F, stored energy 3-4Wh, volume of ca. 100Cm$^3$, weight of ca/ 500gr and maximal continuous current of 130-200A (depending on conditions); as well as larger supercapacitors and packs of supercapacitors, which may be emulated by modified fast-charging batteries **100A** and/or devices **100,** and/or packs thereof. The inventors have found out that modified fast-charging battery **100A** and/or device **100** may be configured to replace any of the examples of supercapacitors listed above, and provide equivalent or even superior performance with respect to the given supercapacitor specifications.

It is noted that modified fast-charging battery **100A** and/or device **100** may be used in a variety of applications where a supercapacitor is used, to replace the supercapacitor by equivalent modified fast-charging battery **100A** and/or device **100** with respect to performance, specifications and physical dimensions. For example, modified fast-charging battery **100A** and/or device **100** may be configured to emulate large supercapacitors (see examples above) and be integrated as such into an electrical power grid (alone or in an array of such devices) to smooth out spikes in energy demand. In another example, modified fast-charging battery **100A** and/or device **100** may be configured to emulate small supercapacitors (see examples above) and be included in consumer electronics devices to ensure an even power supply for the device. In certain embodiments, modified fast-charging battery **100A** and/or device **100** may be particularly advantageous with respect to the emulated supercapacitors in use cases which requires many short operation cycles, such as wireless sensors. As supercapacitors typically have a low energy density and high leakage currents, such scenarios typically exhaust supercapacitors quickly, while the much larger energy density and low leakage currents characterizing modified fast-charging battery **100A** and/or device **100** may enable a much more extended operation of devices in such use cases.

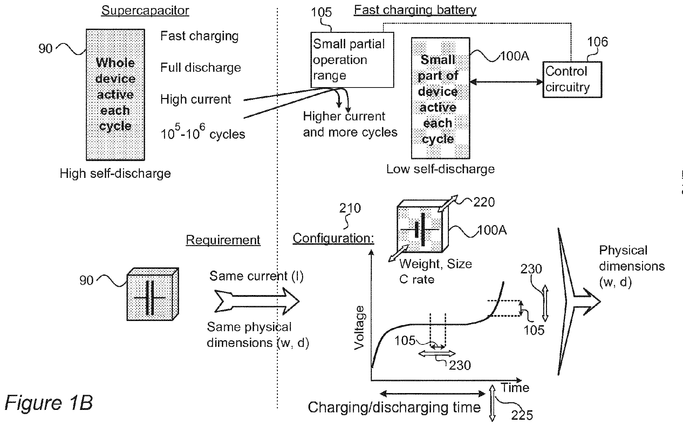

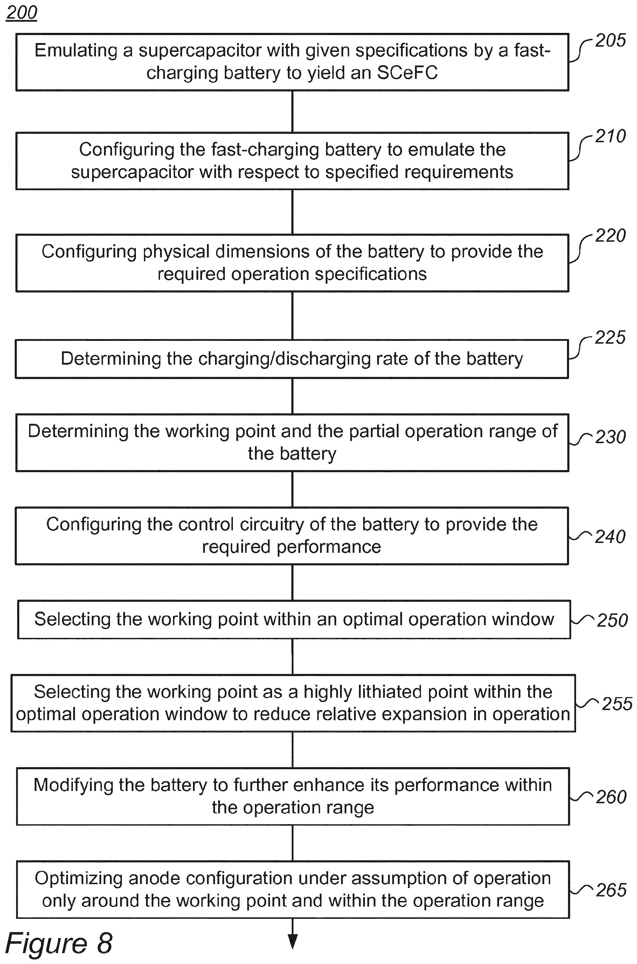

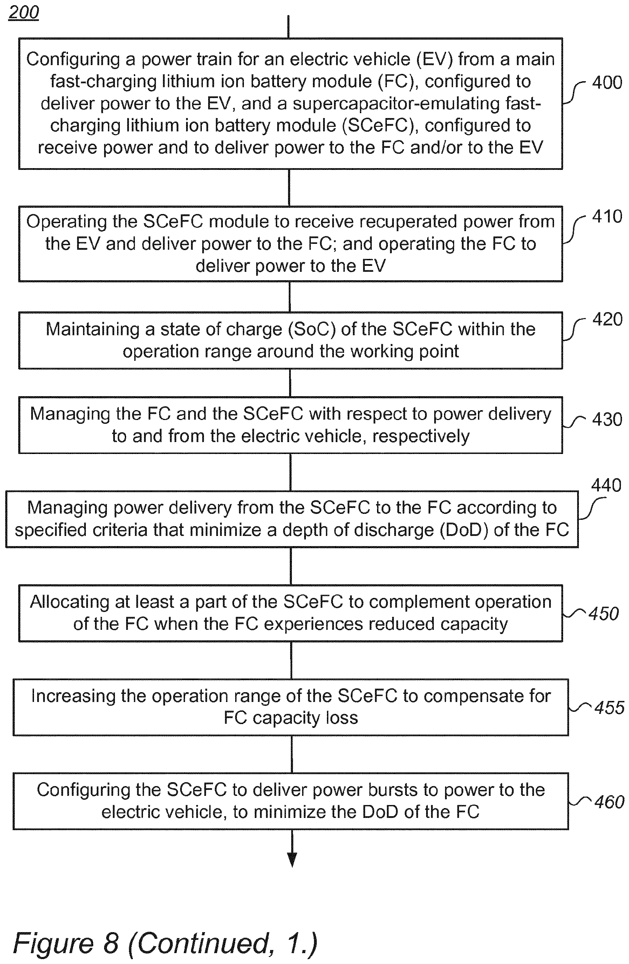

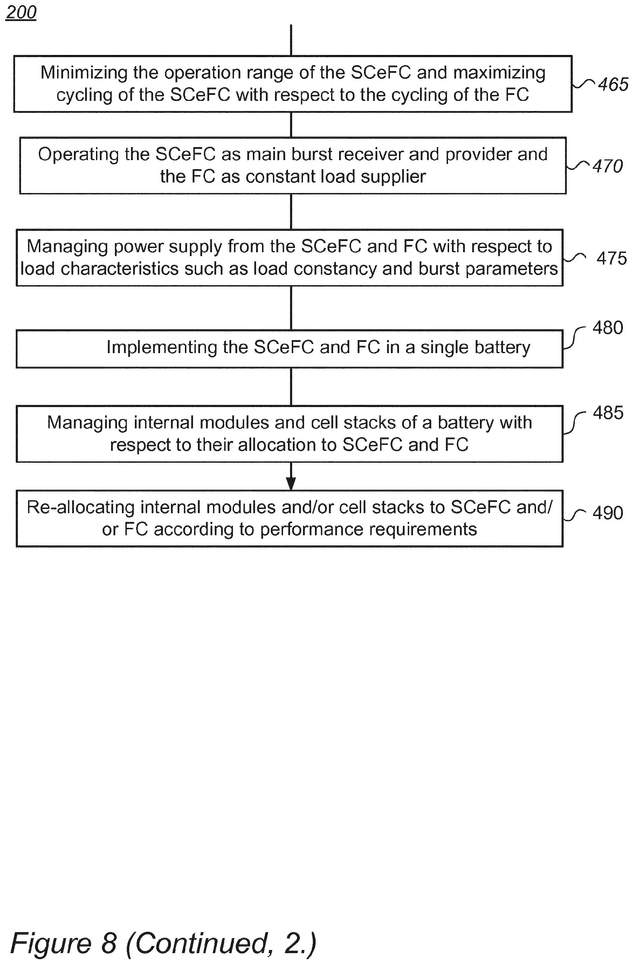

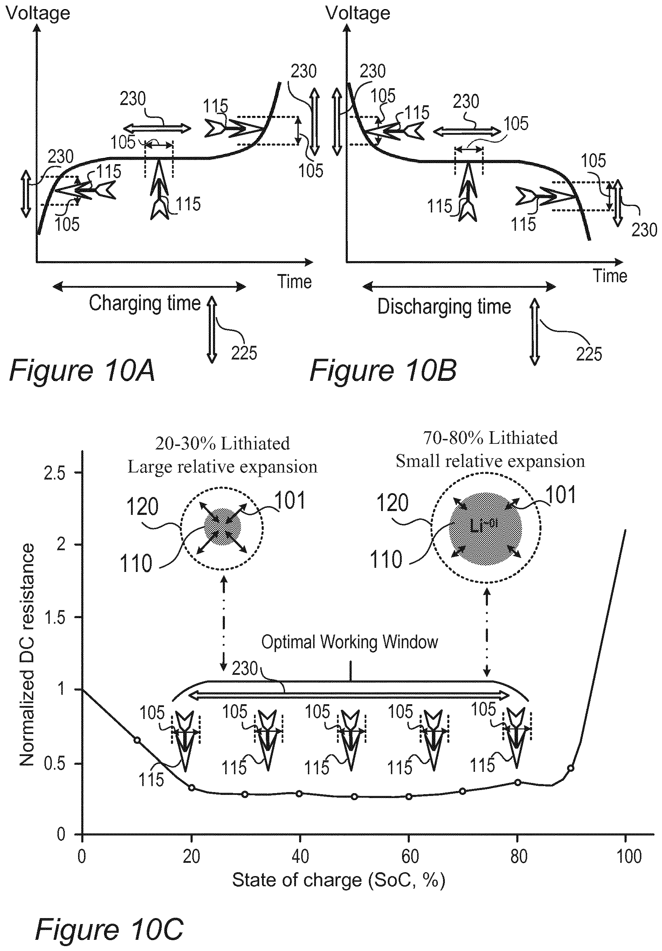

**Figure 1B** is a schematic illustration of supercapacitor-emulating fast-charging battery **100A** and its configuration, according to some embodiments of the invention. **Figure 8** is a schematic flowchart illustrating a method **200** of emulating a supercapacitor by a fast-charging battery and using the emulated supercapacitor in the power train of the electric vehicle, according to some embodiments of the invention. The method stages may be carried out with respect to battery **100.** Method **200** may comprise stages for producing, preparing and/or using battery **100** and the power train, irrespective of their order. **Figures 10A-10C** are schematic illustrations relating to the selection of working point **115** and narrow operation range **105,** according to some embodiments of the invention. **Figures 10A, 10B** illustrate schematically charging and discharging graphs, respectively and **Figure 10C** illustrates an example for an optimal working window for selecting working point **115,** as explained below.

As illustrated schematically in **Figure 1B,** supercapacitors **90** are characterized by fast-charging rates typically having a charging time range of 2-20sec for the range of supercapacitors **90** presented in the Background of the Invention, full discharge in operation, high delivered currents (up to hundreds of amperes of continuous current per single supercapacitor unit) and operability over a large number of cycles ($10^5$-$10^6$ cycles). However, supercapacitors **90** typically suffer from relatively high self-discharge rates (leakage currents of about 1-3% of the maximal continuous current). Moreover, while the power density of supercapacitors **90** may be higher than the power density of lithium ion batteries, the energy density of lithium ion batteries is significantly larger (typically by several orders of magnitude) than the energy density of supercapacitors **90.**

Charge and discharge rate are conventionally measured with respect to battery capacity (typically in terms of the ratio between the respective current and the capacity). Thus, a charging rate of C means that a battery will reach nominal capacity in one hour of charging. Likewise, a 1C discharge rate means that a battery will deplete fully in 1 hour. As used herein, "fast charge" refers to a maximal charging rate of 5C or greater.

Advantageously, fast-charging batteries (e.g., batteries configured to operate at a charge rate of at least about 5C, and in embodiments at a rate of about 15C to about 50C and a discharge rate in embodiments of about 5C) have low self-discharge rates (e.g., about 10% of the leakage current of a comparable supercapacitor), higher working potentials, shorter charging times and higher energy densities - which provide a significant advantage over supercapacitors **90.** Fast charging lithium ion batteries that may be configured to emulate a supercapacitor according to the invention may be of any construction now known or hereafter developed, including those with metalloid-based anodes, as described in U.S. Patent No. 9,472,804.

However, prior art fast-charging batteries typically provide lower currents (typically 1-10% of the continuous currents provided by a comparable supercapacitor) and operate for a smaller number of cycles (typically $10^3$ cycles) supercapacitors **90,** which typically provide higher currents and operate for a larger number of cycles (typically $10^5$-$10^6$ cycles).

Surprisingly, the inventors have figured out a way to emulate supercapacitors **90** by fast-charging batteries **100,** thereby retaining the intrinsic advantages of fast-charging batteries while overcoming the prior art limitations and drawbacks of fast-charging batteries compared to supercapacitors **90.**

Method **200** comprises configuring devices **100** and/or modified fast-charging battery **100A** to emulate supercapacitor **90** with given specifications by operating the fast-charging battery only within a narrow partial operation range **105** around working point **115,** which is defined according to the given specifications of supercapacitor **90** and may be smaller than 20% of the full operation range of the fast-charging battery (see above). Partial operation range **105** may be determined according to the required performance and may be 5%, 1% or any other partial range of the lithium ion battery below 5%.

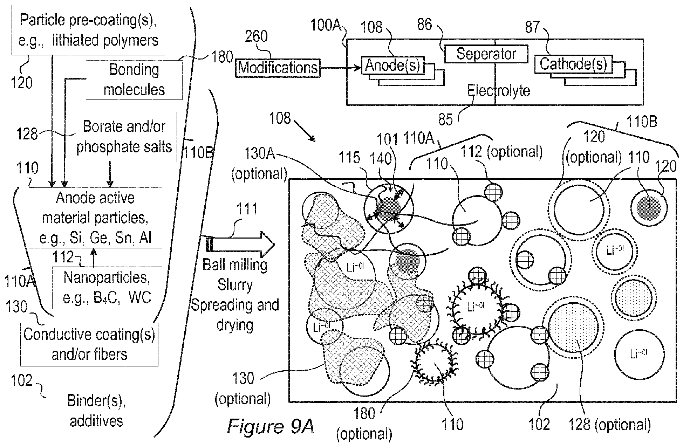

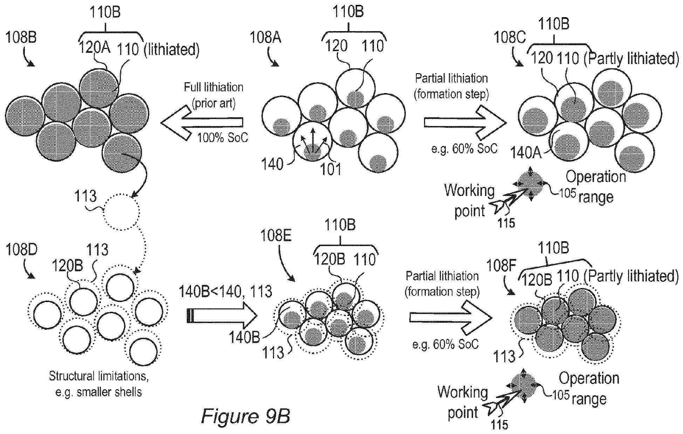

In certain embodiments, fast-charging battery **100A** may be modified or controlled to be charged and discharged only over narrow operation range **105** around working point **115** but not over the full operation range of an unmodified fast-charging battery. For example, modified battery **100A** may be designed to allow only small ranges of expansion of anode material particles **110** (see **Figures 9A** and **9B** below and subsequent disclosure) and therefore not be operable as a regular lithium ion battery over a wide range of charging states.

Method **200** may be used to provide devices **100** and/or modified fast-charging batteries **100A** which emulate a wide range of supercapacitors **90,** at a corresponding wide range of operation specifications, as well as using the emulated supercapacitor in the power train of the EV. Fast-charging batteries **100A** may be configured to emulate corresponding supercapacitors **90** with respect to different performance requirements, such as a same continuous current requirement, a same weight requirement, a same dimensions requirement and so forth, adjusting the unrestricted parameters of fast-charging battery **100A** to emulate specific supercapacitor **90** using only partial operation range **105** of fast-charging battery **100A** to equal the performance of specific supercapacitor **90.** In certain embodiments, fast-charging batteries **100A** may be configured to emulate supercapacitors **90** within a performance envelope defined by the given specifications, possibly without having any specific identical parameters (such as current or dimension). The performance envelope may be defined in terms of one or more of the parameters listed below and/or in terms of any combination thereof. Embodiments of modifications of fast-charging batteries **100A** and configurations of devices **100** and control circuitry **106** are disclosed below.

Without being bound by theory, the inventors suggest that operating modified fast-charging batteries **100A** over a partial operation range **105** enables larger continuous currents to be provided because only a small portion of the whole charging or discharging curve is utilized (see schematic illustration of a charging curve in **Figure 1B**) and increases the number of cycles as in each cycle different areas of battery **100A** are actually operative (see schematic illustration by the checkering of battery **100A** in **Figure 1B**) and therefore battery **100A** in the disclosed operation mode can sustain a number of cycles which is, e.g., two to three orders of magnitudes larger than a typical battery operated over its full range - thereby bridging the gap to supercapacitors **90**.

The following notation and units are used to denote the parameters of supercapacitors **90** (using the subscript SC for "supercapacitor", e.g., Esc) and fast-charging batteries **100A** (using the subscript FCB, e.g., $E_{FCB}$).

Energy parameters: The stored energy is denoted by E (Wh), and gravimetric and volumetric energy densities are denoted by $E_g$ (Wh/kg) and $E_v$ (Wh/1), respectively. The power density is denoted by P (W/kg).

Physical dimensions: The typical dimensions are characterized herein, in a non-limiting manner, by the unit's volume denoted by d ($cm^3$) and the weight is denoted by w (gr).

Performance parameters: The rated voltage is denoted by V (V), the maximal continuous current is denoted by I (A) and the charging time is denoted by t (1/C rate, e.g., for 50C, t=1/50 in hours, with the C rate, or C ratio, being the charging or discharging current divided by the capacity).

Operation parameter: Partial operation range **105** in which fast-charging battery **100A** is operated to emulate a given supercapacitor **90** is denoted by SoC (state of charge, %), e.g., in case fast-charging battery **100A** is operated only at 2% of the total charging/discharging range of fast-charging battery **100A,** then SoC=2% (see examples below).

**Equations 1** present the relations between these parameters, which are valid for both supercapacitors **90** and fast-charging batteries **100A.**

$$E = E_g \cdot w = E_v \cdot d = V \cdot I \cdot t/3600 \text{ and } P = V \cdot I / w \quad \textbf{Equations 1}$$

Non-limiting examples for these parameters are presented above.

It is noted that, as expressed in **Equations 1,** the charging/discharging time in seconds may be defined as *t= E · 3600 / (V. I).*

In order to emulate given supercapacitor **90** by fast-charging battery **100A,** first their physical dimensions (e.g., sizes or weight) and performance parameters may be brought into approximate conformation (illustrated in **Figure 1B** as configuration **210**), depending on the exact performance requirements. For example, if a given continuous current is required, the physical dimensions of fast-charging battery **100A** and possibly the charging/discharging rate may be adjusted (illustrated in **Figure 1B** by adjustments **210** and **225,** respectively). In another example, if given dimensions are required (e.g., at least of a weight and a size dimension), the charging/discharging rate may be adjusted (illustrated in **Figure 1B** by adjustment **225**) and in both cases partial operation range **105** is adjusted (illustrated in **Figure 1B** by adjustment **230**) in order to provide the required performance. See also **Figure 6A** for additional configuration principles **360**.

For example, when given requirement $I_{FCB}=I_{SC}$, the equation E=V·I·t/3600 from **Equations 1** may be used to calculate the required stored energy $E_{FCB}$ in fast-charging battery **100A** and partial operation range **105** may be determined by the ratio between $E_{SC}/E_{FCB}$ to emulate supercapacitor **90** by fast-charging battery **100A**. In some embodiments, energy storage $E_{FCB}$ may be traded off with respect to battery dimensions $D_{FCB}$, $W_{FCB}$ to adjust battery parameter.

In another example, when given requirement $w_{FCB}=w_{SC}$, the equation E=VI/t from **Equations 1** may be used to calculate the required current $I_{FCB}$ and/or charging time $t_{FCB}$ in fast-charging battery **100A** and partial operation range **105** may be determined by the ratio between $E_{SC}/E_{FCB}$ to emulate supercapacitor **90** by fast-charging battery **100A**.

**Tables 1** and **2** provide examples of configurations of fast-charging battery **100A** at two extremes of the range of parameter specifications of supercapacitors **90**.

**Table 1:** Configuration of fast-charging battery at two extreme supercapacitor specifications, denoted as small and large supercapacitors **90,** under condition of same stored energy.

| | Small supercapacitor **90** | Fast-charging battery **100A** | Large supercapacitor **90** | Fast-charging battery **100A** |
|---|---|---|---|---|
| Stored energy | 0.001Wh | | 3.04Wh | |
| Gravimetric energy density | 0.9Wh/kg | 0.9Wh/kg | 6Wh/kg | 11.8Wh/kg |
| Volumetric energy density | 1.7Wh/l | 3.6Wh/l | 7.7Wh/l | 43.4Wh/l |
| Power | 2,400W/kg | 2,500W /kg | 12,000W/kg | 8,500W/kg |
| Rated voltage | 2.7V | 3.35V | 2.7V | 3.35V |

(continued)

| | Small supercapacitor **90** | Fast-charging battery **100A** | Large supercapacitor **90** | Fast-charging battery **100A** |
|---|---|---|---|---|
| Maximal continuous current | 0.7A | 0.8A | 210A | 600A |
| Dimensions | 12mm·8mm | 0.4mm·6.25cm$^2$ | 138mm·60.4mm | 84mm·80cm$^2$ |
| Volume | 0.6cm$^3$ | 0.3cm3 | 395Cm$^3$ | 70cm$^3$ |
| Weight | 1.1g | 1.1g | 510g | 260g |
| ESR* | 700mOhm | | 0.29mOhm | |
| Charging time** | 1.9sec | 1.2sec | 19.3sec | 5sec |

**Table 1** illustrates, in non-limiting examples, the ability to emulate supercapacitors **90** at two extrema of their range of configurations by corresponding fast-charging batteries **100A,** which achieve similar or even superior performance.

Table 2: Configuration of fast-charging batteries for different types of requirements, at two extreme supercapacitor specifications.

| | Small supercapacitor | | Large supercapacitor | |
|---|---|---|---|---|
| Requirement: | Fixed current | Fixed weight | Fixed current | Fixed weight |
| Charging speed and % discharge | 50C@2% | 50C@1.7% | 50C@22% | 50C@3.6% |
| Stored energy | 0.046Wh | 0.056Wh | 13.86Wh | 85.46Wh |
| Gravimetric energy density | 50Wh/kg | 50Wh/kg | 170Wh/kg | 170Wh/kg |
| Volumetric energy density | 200Wh/l | 200Wh/l | 600Wh/l | 600Wh/l |
| Power | 2,500W/kg | 2,500W /kg | 8,500W/kg | 8,500W/kg |
| Rated voltage | 3.35V | 3.35V | 3.35V | 3.35V |
| Maximal continuous current | 0.7A | 0.8A | 210A | 1180A |
| Dimensions | 3.6mm.0.55cm$^2$, or 0.3mm·6.25cm$^2$ | 5.4mm·0.55cm$^2$, or 0.45mm·6.25cm$^2$ | | 84mm·160Cm$^2$ |
| Volume | 0.2cm$^3$ | 0.3cm$^3$ | | 140Cm$^3$ |
| Weight | 0.9g | 1.1g | 110g | 510g |
| ESR | ~100mOhm | ~100mOhm | ~0.5mOhm | ~0.1mOhm |

**Table 2** illustrates, in non-limiting examples, the ability to emulate supercapacitors **90** at two extrema of their range of configurations and according to different specifications requirements, by corresponding fast-charging batteries **100A,** which achieve similar or even superior performance.

Certain embodiments comprise control circuitry **106** of fast-charging battery **100A** which is configured to provide the respective specified current and operate fast-charging battery **100A** only within limited discharging range **105.**

According to some embodiments of the invention, a battery configured to emulate a supercapacitor may be used in conjunction with a battery configured to operate as a battery, in a power train, for example a power train for an electric vehicle.

In the disclosed power train embodiments, two operatively different types of battery modules may be provided, for example one type (fast charging module) which is configured to provide continuous power demands (having high energy density) of the EV and another type (supercapacitor emulation module) which is configured to handle power bursts (having high power density) such as by providing power bursts and receiving power bursts.

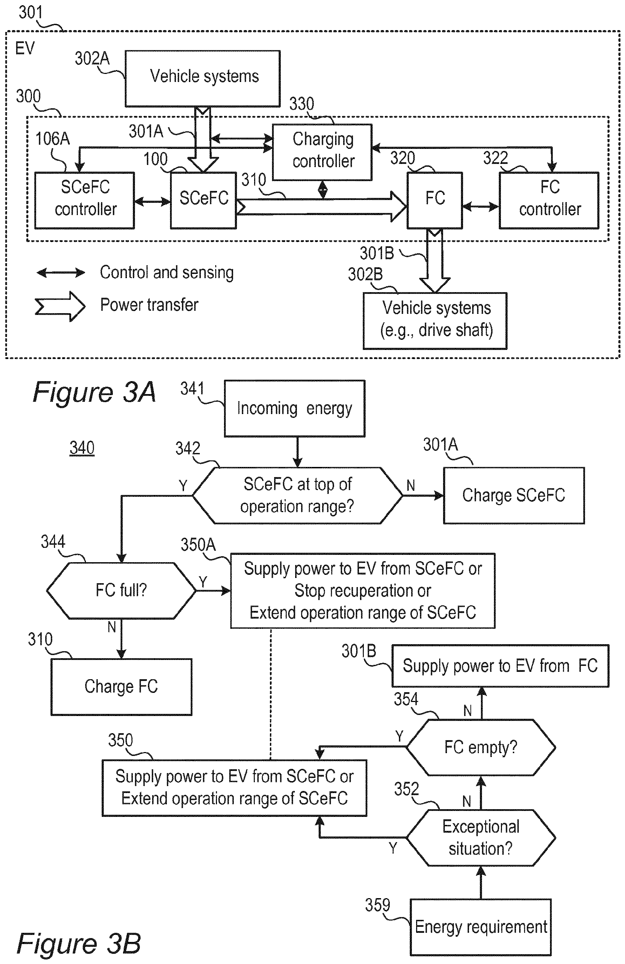

**Figure 2** is a high level schematic illustration of a power train **300** of an electric vehicle (EV) **301,** according to some embodiments of the invention. Power train **300** of electric vehicle **301** (such as, as non-limiting examples, electric cars, electric trucks, electric buses, electric motorcycles, electric off-highway vehicles, electric forklifts etc.) may comprise a fast-charging lithium ion module (FC) **320,** for example as the main power source, configured to deliver power **301B** to EV **301** (represented schematically as vehicle systems, such as vehicle systems providing power and vehicle systems receiving power, denoted **302A, 302B,** respectively, in **Figure 3A**), supercapacitor-emulating fast-charging lithium ion module (SCeFC) **100,** configured to deliver power **310** to FC **320** and receive recuperated power **301A** (e.g., from regenerative braking) from EV **301.**

In general, in embodiments corresponding to such scenario, power train **300** is configured to allocate SCeFC **100** to use recuperated energy to minimize a depth of discharge (DoD) of FC **320,** by using any available energy from recuperation to charge FC **320.** As DoD affects lifetime in a non-linear manner (linear increases in DoD degrade the lifetime in accelerated manner, see below), the inventors may optimize the tradeoff between the number of charging/discharging cycles applied to FC **320** and the DoD that FC **320** experiences (see e.g., **Figure 6A**).

Both FC **320** and SCeFC **100** may have anodes **108** with Si (silicon), Ge (germanium), Sn (tin) and/or LTO (lithium titanium oxide, lithium titanate) -based anode active material **110** (and/or **110A, 110B, 115,** see **Figures 9A, 9B** below), possibly providing power train **300** based on a single type of anode material.

SCeFC **100** may be configured to operate at 5C at least and within operation range 105 of 5% at most around working point **115** of between 60-80% lithiation of the Si, Ge, Sn and/or LTO-based anode active material **110** (and/or **110A, 110B, 115**).

Power train **300** may further comprise a control unit **330** configured to maintain a state of charge (SoC) of SCeFC **100** within operation range **105** around working point **115,** manage FC **320** and SCeFC **100** with respect to power delivery to and from vehicle **301,** denoted schematically **301B** and **301A** respectively, and manage power delivery **310** from SCeFC **100** to FC **320** according to specified criteria that minimize a depth of discharge of FC **320.** For example, FC **320** may be associated with FC battery management system (FC BMS) **322** and SCeFC **100** may be associated with SCeFC battery management system (SCeFC BMS) **106A,** possibly comprising control circuitry **106.** It is noted that FC BMS **322** and SCeFC BMS **106A** are configured to manage respective FC and SCeFC modules, which may be implemented both in a single battery or in two or more separate batteries, as explained below. In single battery implementations, FC BMS **322** and SCeFC BMS **106A** may be configured to manage respective FC and SCeFC modules in the single batteries.

Advantageously, while FC **320** provides high energy density in power train **300,** SCeFC is **100** configured, as described above, to provide high power density to power train **300,** to complement FC **320** in operating power train **300** of EV **301.**

Advantageously, SCeFC **100** may be configured to buffer multiple energy inputs **301A** from vehicle systems **301,** which are irregular in extent and timing, and provide regulated power **310** to FC **320** in correspondence to the optimal operation thereof. As SCeFC **100** may be configured to be operable over a very large number of cycles (e.g., 10,000's cycles, as explained and demonstrated above), SCeFC **100** can withstand the erratic energy inputs **301A** without reduction of the cycle lifetime of power train **300.** Moreover, as the actual capacity of SCeFC **100** is much higher than its operation range **105,** it may also be used to receive peaks of power **301A** and thereby increase the extent and efficiency of energy recuperation, as exemplified in **Table 3** below. The combination of FC **320** and SCeFC **100** in disclosed embodiments may therefore extend the cycle lifetime of power train **300** beyond the cycle lifetime of FC **320** (as SCeFC **100** buffers much of the cycling), for example two-fold, three-fold or even ten-fold. e.g., from hundreds of cycles for FC **320** to thousands of cycles for power train **300** (or, in various embodiments, from 300-500 cycles for FC **320** to 600-2000 cycles for power train **300**). Alternatively or complementarily, power train **300** may provide increased capacity and/or larger recuperation extent and efficiency than FC **320** operated by itself. Alternatively or complementarily, power train **300** may improve cost and/or size parameters, as explained in the examples above for SCeFC **100** alone and as illustrated for power train **300** in **Table 3** below.

**Table 3** presents a schematic, non-limiting comparison of power trains for electric vehicles. The power trains are compared under various assumptions: The first three columns present parameters for single battery module solutions, with current lithium ion batteries (first column) and with fast charging batteries (second and third columns) based on disclosed anodes **108** with Si, Ge and/or Sn -based anode active material **110** (and/or **110A, 110B, 115,** see **Figures 9A, 9B** below, and/or possibly alternative anode active material for fast charging batteries such as lithium titanate, LTO). For all solutions an average energy consumption of 17.5 kWh per hour is assumed.

The first three single battery module solutions receive power **301A** as well as provide power **301B** from and to vehicle systems **301,** respectively, as single battery module solutions. The first and second columns assume 100kWh battery packs, while the third column assumes a 80kWh battery pack, which is configured to provide similar range and driving time as the first column solution (prior art Li ion battery). Both fast charging battery alternatives provide higher energy recuperation through their ability to be fast charged, and therefore ability to receive and deliver more energy than slow charging prior art batteries (based e.g., on graphite anodes). The second column solution uses the additional energy to increase driving time and range while the third column solution uses the additional energy to reduce battery size. It is noted that the fast charging solutions are characterized by more effective charging cycles per day, which may reduce the time for reaching the overall number of available cycles (cycle lifetime). Overall, the second column solution increases the range of the electric vehicle due to more efficient recuperation while the third column solution reduces the size and cost of the battery pack, with both solutions requiring an increased (ca. double) number of cycles.

The fourth and fifth columns present parameters of two batteries solutions, which are illustrated schematically in **Figure 2,** and both improve battery pack performance and maintain or enhance the cycle lifetime of the battery pack. It is noted that the two batteries may as well be implemented as two modules in a single battery, as explained below. In both cases all recuperation (receipt of power **301A** from vehicle systems **301**) is carried out by SCeFC **100,** and it is assumed that 60kWh are recuperated. The forth column solution represents a larger battery pack of 80+60=140kWh, while the fifth column solution provides the same battery pack capacity as the first single battery solution. Both the fourth and fifth column solutions are configured to provide the same drive time and range as the first single battery solution (despite the larger capacity of the forth column solution and the larger recuperation of the fifth column solution), due to partial operation range **105** of SCeFC **100** which is configured to support a very large number of cycles, as explained above.

The partial operation is expressed in the charging cycles per day (>20 for operation range<5% SoC; and >300 for operation range<1% SoC for fourth and fifth column solutions, respectively), with corresponding performance parameters of energy per %SoC and pulse frequency. In both cases FC **320** receives power **310** from SCeFC **100** only, enabling optimized operation thereof and maximization of its cycle lifetime (see e.g., **Figure 6A**). The inventors note that **Table 3** provides non-limiting schematic examples to explain the operation and advantages of embodiments of the disclosed inventions, which may be configured according to the disclosed guidelines to provide any required performance requirements concerning the relations between the electric vehicle, the battery pack parameters and the configuration of SCeFC **100,** FC **320** their corresponding BMS's **106A, 322,** respectively and control unit **330**. Lifetime estimations are suggested as number of charge/discharge cycles and are very crude, intended to suggest the improvement in disclosed embodiments, and are not to be understood as limiting.

**Table 3**: Comparison of power trains for electric vehicles.

|  | Single prior art battery (1) | Single fast charging battery (2) | Single fast charging battery (3) |
|---|---|---|---|
| Battery Pack | 100 kWh | 100 kWh | 80 kWh |
| % of Recuperation | 40 % | 80 % | 80 % |

| | | | |
|---|---|---|---|
| Recuperation Energy | 40 kWh | 80 kWh | ~60 kWh |
| Total Energy | 140 kWh | 180 kWh | 140 kWh |
| Driving time | 8 hours | 10 hours | 8 hours |
| Average Energy Consumption | 17.5 kWh per hour | 17.5 kWh per hour | 17.5 kWh per hour |
| Average Recuperation | 4 kWh per hour | 8 kWh per hour | 8 kWh per hour |
| Range | 300 km | 385 km | 300 km |
| Charging per day | 1 | 1 | 1 |
| Effective charging per day | ~1.5 | ~2 | ~2 |
| Lifetime (cycles) | | 300-500 | 300-500 |

**Table 3** (Continued)

| | Two batteries (hybrid) - FC and SC-emulating FC (4) | | Two batteries (hybrid) - FC and SC-emulating FC (5) | |
|---|---|---|---|---|
| Battery Pack | 80 kWh | 60 kWh | 80 kWh | 20 kWh |
| % of Recuperation | 0 % | 100 % | 0 % | 300 % |
| Recuperation Energy | | 60 kWh | | 60 kWh |
| Total Energy | 140 kWh | | 140 kWh | |
| Driving time | 8 hours | | 8 hours | |
| Average Energy Consumption | 17.5 kWh per hour | | 17.5 kWh per hour | |
| Average Recuperation | 8 kWh per hour | | 8 kWh per hour | |
| Range | 300 km | | 300 km | |
| Charging per day | 1 | >20 (<5 %SoC) | 1 | >300 (<1 %SoC) |
| Effective charging per day | 1 | 1 (<5 %SoC) | 1 | 1 (<1 %SoC) |
| Energy per %SoC | 3 kWh | | 0.2 kWh | |
| Pulse frequency | ~20 min | | 1.5 min | |
| Lifetime (cycles) | 1,000-2,000 | | >5,000-20,000 | |

Advantageously, due to the larger extent of power recuperation and the controlled discharging of FC **320** cycle lifetime may be prolonged with respect to single battery solutions (e.g., presented in second and third columns) with the same overall capacity, as the DoD degrades the cycle lifetime non-linearly - low DoDs of 10-40% typically enable thousands of cycles while deep DoDs of ca. 60-100% typically enable only hundreds of cycles. In certain embodiments, control unit **330** may be configured to buffer the DoD of FC **320** by discharging SCeFC **100** at high demands, thereby reducing the DoD of FC **320** and increasing its cycle lifetime.

Moreover, also concerning SCeFC **100** the regulation of DoD may be used to increase its cycle lifetime. In the presented examples, the fourth column solution provides a larger battery pack which is operated under relatively relaxed conditions (relatively wide operation range, relatively low pulse frequency), while the fifth column solution provides a smaller battery pack (similar to the first column solution) which is operated under stricter conditions (narrower operation range, higher pulse frequency), which enable longer cycle lifetime, as it maintains a smaller DoD. For example, the presented fifth column solution provides a cycle lifetime of SCeFC **100** which may be three to ten times longer than the cycle lifetime of SCeFC **100** in the fourth column solution.

Regarding the schematic and non-limiting lifetime estimation for power train **300** (of compound battery system, including FC **320** and SCeFC **100**), embodiments presented in the fourth column provide an increase of estimated 3 to 10 times with respect to single battery solutions (columns 2 and 3) by using SCeFC **100** to buffer energy bursts, reduce the number of cycles and/or reduce DoD of FC **320.** Embodiments presented in the fifth column may provide a further increase of estimated 5 to 10 times with respect to the forth column solution due to the narrowing of operation range **105** (5% to 1% SoC) and the non-linear dependence of the lifetime of FC **320** on the DoD, as explained above. Even assuming linear dependence on DoD, reduction of operation range **105** provides the factor of 5 in lifetime, due to operation at 1%SoC instead of 5%SoC. The non-linear dependence of lifetime of DoD enables to push this advantage even further, using SCeFC **100** for a larger proportion of the cyclings with respect to FC **320,** for example, in the fifth column solution, FC **320** may be used at a single charging per day and SCeFC **100** may be used at **300** charges per day for SCeFC **100** run at 1%SoC.

It is emphasized that the separation of power train **300** into one FC **320** and one SCeFC **100** is provided here in a non-limiting manner and only as an example. In various embodiments, FC **320** and SCeFC **100** may be implemented as a single battery module having separate controls on different parts thereof, corresponding to FC **320** and SCeFC **100** (which may also be designed differently internally, as disclosed herein) and/or multiple batteries may be used as FC **320** and/or as SCeFC **100,** either in battery packs sharing controllers or as multiple batteries for performing each function.

In certain embodiments, control unit **330** may be configured to utilize SCeFC **100** for providing additional power in case FC **320** is exhausted, e.g., for extending the range of the electric vehicle. In such cases, SCeFC **100** may be operated as main power supplier once the power in FC **320** is depleted.

In certain embodiments, control unit **330** may be configured to adapt the operation configuration of SCeFC **100** to compensate for reduced SoH of FC **320.** For example, if a part of FC **320** becomes damaged or non-functional, control unit **330** may be configured to allocate a part of SCeFC **100** to compensate for the capacity loss of FC **320.** In certain embodiments, control unit **330** may be configured to allocate up to whole SCeFC **100** to replace capacity loss of FC **320.** In certain embodiments, control unit **330** may be configured to operate SCeFC **100** at larger operation ranges **105** to provide the required additional power.

Power from SCeFC **100** and FC **320** in power train **300** may be provided to EV **301** in a wide range of scenarios, which may be optimized with respect to performance and route parameters. In the following, two non-limiting types of scenarios are presented - the first one involving power supply only from FC **320** to EV **301** (with SCeFC **100** providing power to FC **320** and not directly to EV **300**) and the second one involving power supply from either SCeFC **100** and FC **320** to EV **300,** with additional power transfer from SCeFC **100** to FC **320** to increase its level of charging. Elements from either scenario may be combined and/or scenarios may be switched by control unit **330** during operation. Control unit **330** may be configured to optimize energy flow to, within and from power train **300** according to various parameters disclosed below, such as any of the state of the battery modules, the power requirements and supply, route and weather parameters and external adjustments.

**Figures 3A-3C** are schematic illustrations of system configurations, operation algorithms **340** and examples **343** of power train **300** of electric vehicle **301,** according to some embodiments of the invention.

**Figure 3A** illustrates schematically power train **300** in vehicle **301,** according to some embodiments of the invention. Vehicles systems **302A** such as brakes are illustrated as power providers while vehicles systems **302B** such as the drive shaft are illustrated as power consumers, without loss of generality. Power transfer to vehicles systems **302B** may be carried out from FC **320** (power **301B**). FC **320** may be provided with power **310** from SCeFC **100,** after storage of power bursts therein, received (**301A**) from vehicles systems **302A.** Charging controller **330** may be configured to control each of power transfers **301A**, **310, 301B** directly and/or through corresponding SCeFC controller **106A** and FC controller **322.** Charging controller **330,** SCeFC controller **106A** and FC controller **322** may comprise or be part of control unit **330,** SCeFC BMS **106A** and FC BMS **322** illustrated in **Figure 2.** It is noted that, in any of the embodiments, the terms controller and BMS may be used alternately, or may represent hierarchically arranged unit, possibly partly or fully integrated in control unit **330.**

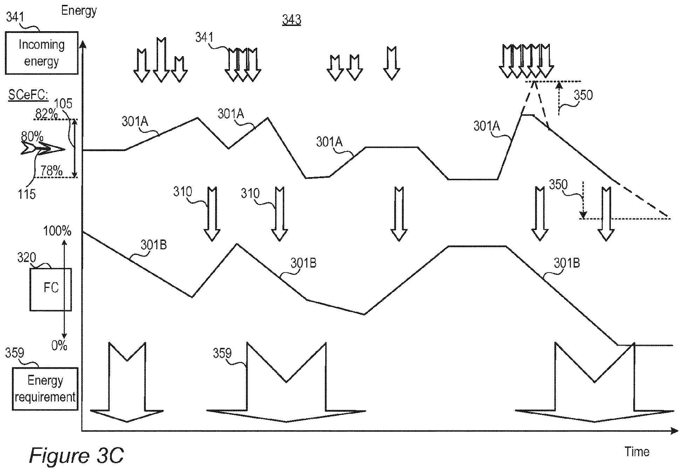

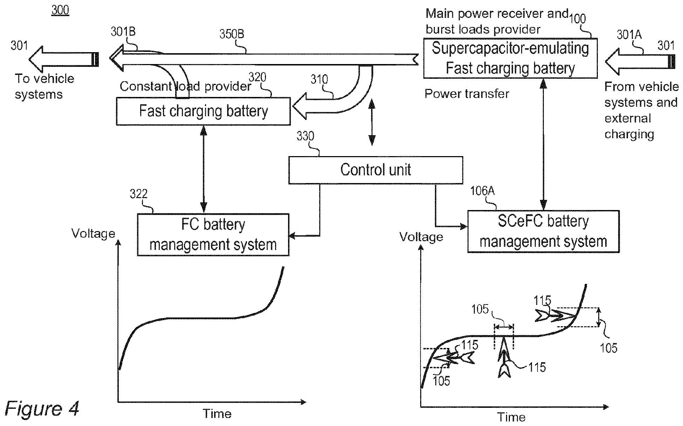

**Figure 3B** illustrates schematically an operation scheme **340** of power train **300** in vehicle **301,** according to some embodiments of the invention. Incoming energy **341,** e.g., energy received from vehicle systems **301** and/or charged energy, may be delivered to and be stored in SCeFC **100** (as power transfer **301A**) if SCeFC **100** is not at the top of its operation range **105** (see **342**). If SCeFC **100** is at the top of its operation range **105** (see **342**), FC **320** may be charged **310** therefrom, while SCeFC received complementary energy **341,** if FC **320** is not full (see **344**). If both SCeFC **100** and FC **320** are at their uppermost defined capacity, any of the following options may be implemented (see **350A**): stopping recuperation (losing incoming recuperated energy from incoming energy **341**), supplying power to vehicle systems (**301B**) directly from SCeFC **100** (see also **Figure 3C** below) and/or extending operation range **105** of SCeFC **100,** if possible physically and if such exception is predefined as available. Considering energy consumption, for energy requirements **359,** e.g., energy consumed by vehicle systems **301,** if no exceptional situation exists (see **352**) and FC **320** is not empty (see **354**), power may be supplied (**301B**) from FC **320.** Exceptional situations and/or empty FC **320** may be handled by (see **350**): supplying power to vehicle systems (**301B**) directly from SCeFC **100** (see also **Figure 4** below) and/or extending operation range **105** of SCeFC **100,** if possible physically and if such exception is predefined as available.

It is noted that working point **115** and operation range **105** of SCeFC **100** may be configured to comply to certain expected amounts of incoming recuperated energy of incoming energy **341** and/or certain maximal energy recuperation criteria, which may significantly affect the overall energy efficiency of vehicle **301. Figure 6A** below and related embodiments address processes for determining these parameters.

**Figure 3C** is a high-level schematic non-limiting qualitative example, according to some embodiments of the invention, for operation of power train **300** in an arbitrary scenario **343** of power supply, such as bursts of incoming energy **341** (e.g., recuperated energy and/or, alternatively or complementarily, bursts of charged energy from a charging station) indicated by arrows at the top part of the diagram, and power requirements **359,** indicated schematically by the thick arrows at the bottom part of the diagram. In operation scheme **340** along the principles outlined in **Figures 2, 3A** and **3B,** SCeFC **100** is operated as main power receiver (**301A**) and buffers incoming energy bursts **341** to reduce the number of chargings **310** of FC **320** and thereby reduce the number of cycles undergone by FC **320**. It is noted that a tradeoff may be optimized between a number of charging and discharging cycles of FC **320** and the DoD of FC **320** to maximize its overall lifetime (see e.g., **Figure 6A**). FC **320** as main power supplier (**301B**) in embodiments corresponding to presented scenario **340** delivers required energy **359.** An exceptional scenario **350** of extending operation range **105** is illustrated schematically at the righthand side of the diagram (in either direction - above the maximal SoC to receive more regenerated energy, or below the minimal SoC to provide additional power, e.g., if FC **320** is drained, not shown). Exceptional scenario **350** may be required as emergency scenario, e.g., in case FC **320** is unavailable, possibly in repair mode of FC **320,** for exceptional range extension requirements, or possibly for enhanced recuperation under certain circumstances, as explained below. In the illustrated example, SCeFC **100** is shown to be operated at ±2% operation range **105** around 80% lithiation as working point **115,** without loss of generality. It is noted that SCeFC **100** is generally operated with a much higher charging and discharging C rate than FC **320,** using its high cyclability.

**Figure 4** is a high level schematic illustration of power train **300** of electric vehicle **301,** according to some embodiments of the invention. Power train **300** of electric vehicle **301** may comprise FC **320** as constant load power provider, configured to deliver power **301B** to electric vehicle **301,** particularly when under prolonged load, and SCeFC **100,** configured to receive recuperated power **301A** from electric vehicle **301,** which typically arrives in bursts, and also to deliver burst power loads **350B** to electric vehicle **301.** Recuperated energy charged into SCeFC **100** beyond power requirements may be used to charge FC **320.**

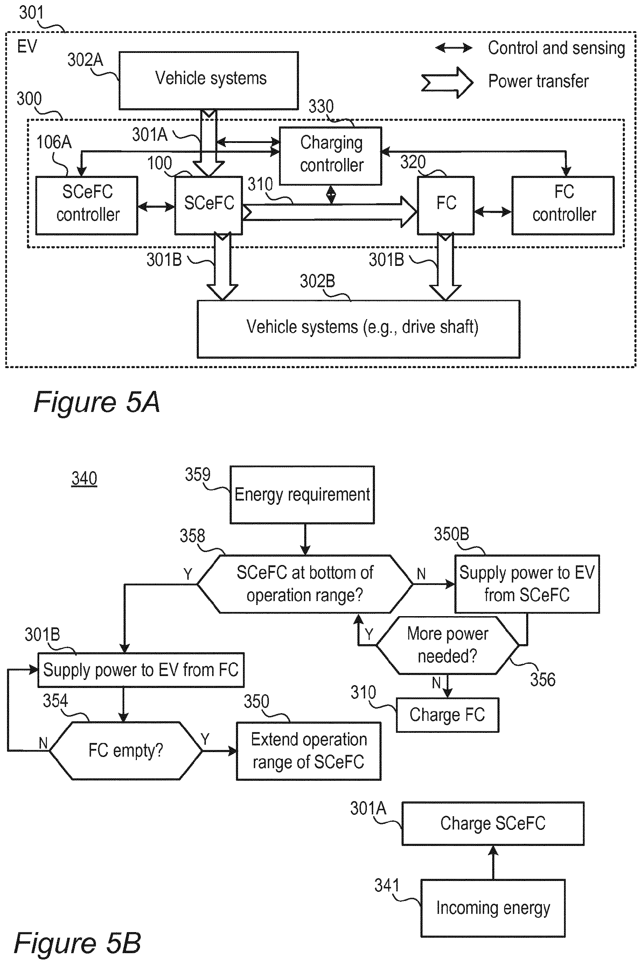

In general, in embodiments corresponding to such scenario (see also **Figures 5A**-5C below), power train **300** is configured to allocate SCeFC **100** to handle bursts, thereby making use of its long cycle lifetime achieved as disclosed above, while minimizing cycling of FC **320** to increase the overall lifetime of power train **300.**

Both FC **320** and SCeFC **100** may have anodes **108** with Si, Ge, Sn and/or LTO-based anode active material **110** (and/or **110A, 110B, 115,** see **Figures 9A, 9B** below), possibly providing power train **300** based on the same type of anode material.

SCeFC **100** may be configured to operate at 5C at least and within operation range **105** of 5% at most around working point **115** of between 60-80% lithiation of the anode active material, which may comprise Si, Ge, Sn and/or LTO-based anode active material **110** (and/or **110A, 110B, 115**).

Power train **300** may further comprise control unit **330** configured to maintain a state of charge (SoC) of SCeFC **100** within operation range **105** around working point **115,** manage FC **320** and SCeFC **100** with respect to power delivery to and from vehicle **301,** denoted schematically **301B** and **301A** respectively, and manage power delivery **310** from SCeFC **100** to FC **320** according to specified criteria that minimize the cycling and possibly DoD of FC **320.** For example, FC **320** may be associated with FC battery management system (FC BMS) **322** and SCeFC **100** may be associated with SCeFC battery management system (SCeFC BMS) **106A,** possibly comprising control circuitry **106.**

Advantageously, SCeFC **100** may be configured to receive energy bursts and deliver required energy bursts, which are irregular in extent and timing, to reduce cycling of FC **320**. As SCeFC **100** may be configured to be operable over a very large number of cycles (e.g., 10,000's cycles, as explained and demonstrated above), SCeFC **100** can withstand the erratic energy inputs **301A** without reduction of the cycle lifetime of power train **300.** Moreover, as the actual capacity of SCeFC **100** is much higher than its operation range **105,** it may also be used to receive peaks of power **301A** and thereby increase the extent and efficiency of energy recuperation, as exemplified in **Table 3** above. The combination of FC **320** and SCeFC **100** in disclosed embodiments may therefore extend the cycle lifetime of power train **300** beyond the cycle lifetime of FC **320** (as SCeFC **100** buffers much of the cycling), for example two-fold, three-fold or even ten-fold. e.g., from hundreds of cycles for FC **320** to thousands of cycles for power train **300** (or, in various embodiments, from 300-500 cycles for FC **320** to 600-2000 cycles for power train **300**). Alternatively or complementarily, power train **300** may provide increased capacity and/or larger recuperation extent and efficiency than FC **320** operated by itself. Alternatively or complementarily, power train **300** may improve cost and/or size parameters, as explained in the examples above for SCeFC **100** alone and as illustrated for power train **300** in **Table** 3 above.

**Figures 5A-5C** are high level schematic illustration of system configurations, operation algorithms **340** and examples **343** of power train **300** of electric vehicle **301,** according to some embodiments of the invention.

**Figure 5A** illustrates schematically power train **300** in vehicle **301,** according to some embodiments of the invention. Vehicles systems **302A** such as brakes are illustrated as power providers while vehicles systems **302B** such as the drive shaft are illustrated as power consumers, without loss of generality. Power transfer to vehicles systems **302B** may be carried out from SCeFC **100** (power **301B**) and as long as it has available power, which is received from stored recuperated power bursts received (**301A**) from vehicles systems **302A**. FC**320** may be configured to provide constant power **301B** when needed, while SCeFC **100** may be used to minimize the DoD of FC **320**. FC **320** may be provided with power **310** from SCeFC **100,** when SCeFC **100** can provide energy beyond the burst requirement of vehicle **301**. Charging controller **330** may be configured to control each of power transfers **301A, 310, 301B** directly and/or through corresponding SCeFC controller **106A** and FC controller **322**. Charging controller **330**, SCeFC controller **106A** and FC controller **322** may comprise or be part of control unit **330**, SCeFC BMS **106A** and FC BMS **322** illustrated in **Figure 4.** It is noted that, in any of the embodiments, the terms controller and BMS may be used alternately, or may represent hierarchically arranged unit, possibly partly or fully integrated in control unit **330**.

**Figure 5B** illustrates schematically a high-level operation scheme **340** of power train **300** in vehicle **301,** according to some embodiments of the invention. Energy requirements **359**, e.g., energy consumed by vehicle systems **301,** may be first provided **(350B)** by SCeFC **100**, if SCeFC **100** is above the bottom of operation range **105** (see **358**). Otherwise, e.g., if SCeFC is drained (see **356, 358**) - FC **320** may be used to provide power to vehicle **301** (**301B**), particularly during constant loads. Alternatively, if extra power is left in SCeFC **100** which is not provided to vehicle **301,** FC **320** may be charged from SCeFC **100** (see **310**). Once FC **320** is empty (see **354**), exceptional case **350** of extending operation range **105** may be applied, e.g., as emergency mode explained below. Incoming energy **341,** e.g., energy received from vehicle systems **301** and/or from charging stations, may be delivered to and be stored in SCeFC **100** (as power transfer **301A**) and delivered therefrom directly to vehicle **301** and/or to FC **320**. It is noted that working point **115** and operation range **105** SCeFC **100** may be configured to comply with certain expected amounts of incoming energy **341** and/or certain maximal energy recuperation criteria, which may significantly affect the overall energy efficiency of vehicle **301**. **Figure 6A** below and related embodiments address processes for determining these parameters.

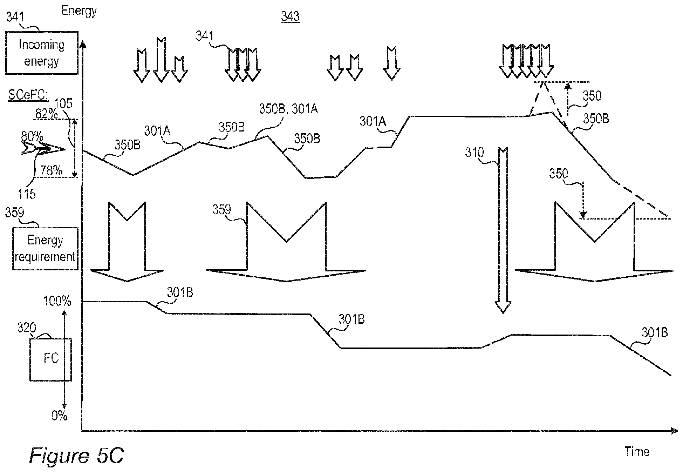

**Figure 5C** is a schematic non-limiting qualitative example **343,** according to some embodiments of the invention, for operation of power train **300** in an arbitrary scenario of power supply such as bursts of incoming energy **341** (e.g., recuperated energy and/or, alternatively or complementarily, bursts of charged energy from a charging station) indicated by arrows at the top part of the diagram, and power requirements **359,** indicated schematically by the thick arrows at the bottom part of the diagram, and similar to **Figure 3C.** In an operation scheme along the principles outlined in **Figures 4, 5A** and **5B**, SCeFC **100** is operated as receiver of energy bursts **341** and provider of energy **350B** to satisfy the vehicle's energy requirements **359,** to reduce the DoD and the number of chargings **310** of FC **320**. It is noted that the tradeoff between the number of charging and discharging cycles of FC **320** and the DoD of FC **320** may be optimized to maximize its overall lifetime (see e.g., **Figure 6A**). FC **320** supplies typically larger and constant power demands (**301B**) to deliver required energy **359,** and is charged by SCeFC **100** when energy therefrom is available. Exceptional scenario **350** (illustrated schematically at the righthand side of the diagram, in either direction - above the maximal SoC to receive more regenerated energy, or below the minimal SoC to provide additional power, e.g., if FC **320** is drained, not shown) may be required as emergency scenario, e.g., in case FC **320** is unavailable, possibly in repair mode of FC **320,** for exceptional range extension requirements, or possibly for enhanced recuperation under certain circumstances, as explained below. In the illustrated example, SCeFC **100** is shown to be operated at ±2% operation range **105** around 80% lithiation as working point **115,** without loss of generality. It is noted that SCeFC **100** is generally operated with a much higher charging and discharging C rate than FC **320,** using its high cyclability.

It is noted that in both **Figures 3C** and **5C**, the slopes of charging and discharging SCeFC **100** are steeper than the slopes of charging and discharging FC **320,** due to the higher maximal charging and discharging rates (C rate) achievable by the configuration of SCeFC **100** to have higher C rate than FC **320,** as described above. As non-limiting examples, FC **320** may be operable at a maximal C rate (charging/discharging current to capacity ratio) of any of 1C, 2C, 5C, 10C, while SCeFC **100** may be configured to be operable at a maximal C rate of any of 5C, 10C, 20C, 30C, respectively, or even at higher maximal C rates of e.g., 50C, 100C or higher, depending on the configuration parameters of SCeFC **100,** as explained above.

**Figure 6A** illustrates schematically a high-level flowchart of an algorithm **360** for optimizing module sizes **368** of FC **320** and SCeFC **100** of power train **300** in vehicle **301,** according to some embodiments of the invention. For example, predefined required recuperation energy criteria **361,** parameters of expected charge/discharge profiles (e.g., expected burst or pulse frequency) and energy per cycles criteria **362** may be used to characterize expected charging/discharging cycles **365** for each of FC **320** and SCeFC **100** according to various operation schemes **340** and scenarios **343**. Then, resulting SoC profiles **367** from expected charging/discharging cycles **365** may be used, together with parameters **362** presented above, may be used to calculate SCeFC and FC module sizes **368,** as well as working point **115** and operation range **105** for SCeFC **100**. For example, a non-limiting calculation based on a required recuperation ability **361** of 60kWh pack during 8 hours and charge/discharge profile (pulse frequency) **362** of ca. 1.5 minutes or 0.2kWh per each charge/discharge cycle results in required cycle number **365** of **300** charge/discharge cycles (60kWh divided by 0.2kWh) and predefined SoC **367** of 1%. These parameters correspond to SCeFC module **100** of 20kWh (which then provides 0.2kWh at 1% SoC). Further consideration of constant load requirements of vehicle **301** may further provide the required FC module size.

**Figure 6B** is a high level schematic illustration of power train **300** and operation modes thereof, according to some embodiments of the invention. Illustrated power train **300** is configured to receive energy burst by SCeFC **100** and provide power to burst loads **359A** by SCeFC **100,** and to deliver power to constant loads **359B** by FC **320,** with SCeFC **100** is also configured to charge **310** FC **320,** with all energy transfers controlled by control unit **330.**

In certain embodiments, SCeFC **100** may be configured to have a similar lifetime as FC **320,** by being operated at higher frequency (more cycles) utilizing its capacity to support a large number of cycles. The high charging rate of SCeFC **100** is utilized to capture energy from regenerative braking, and the capacity of SCeFC **100** may be configured to support operation range **105** which enables to accept most or even all of the recovered energy.

In certain embodiments, SCeFC **100** may be configured to have a voltage level which is above a minimum cranking voltage during engine start - to enable starting the engine by SCeFC **100,** providing corresponding burst load **359A**. SCeFC **100** may be configured to accept high currents for short periods of time during regenerative breaking, and be partly charged up to predefined SoC. SCeFC **100** may be configured to supply loads when the engine is off, and possibly support engine starts and stops, while FC **320** may be configured to provide constant loads **359B** during longer periods. Controller **330** may be configured to allocate SCeFC **100** and/or FC **320** according to required loads **359** and set corresponding priorities. Controller **330** may be further configured to regulate the charging and discharging currents to all components (together or separately) with the defined priorities.

In certain embodiments, SCeFC **100** may be operated in emergency mode (e.g., for extending range) and be charged **350** over predefined SoC (beyond predefined operation range **105,** if possible) to provide additional energy to extend the range of vehicle **301,** e.g., in emergency cases. For example, in a 80kWh FC **320** and 20kWh SCeFC **100** (see e.g., the fifth column in **Table 3** above), additional 20kWh provided by SCeFC (either from grid charging and/or by extending operation range **105**) may increase the total energy of power train **300** and the maximal range by 20% (or 25% with respect to FC **320** alone).

In certain embodiments, part of the capacity of SCeFC **100** may be used to compensate for capacity loss of FC **320,** as illustrated schematically in **Table 4** in a non-limiting example. In repair mode use, SCeFC module **100** may be partially used as repair battery for FC module **320** to extend the overall cycle life.

**Table 4:** An example for repair mode operation

| | Two batteries (hybrid) - FC and SC-emulating FC | | Repair mode Two batteries (hybrid) - FC and SC-emulating FC | |
|---|---|---|---|---|
| Battery Pack | 80 kWh | 20 kWh | 80 kWh | 20 kWh |
| % of Recuperation | 0 % | 300 % | 0 % | 300 % |
| Recuperation Energy | | 60 kWh | | 60 kWh |
| Damaged Cell | 10 kWh | - | 10 kWh | - |
| Final Battery Pack | 70 kWh | 20 kWh | 80 kWh | 10 kWh |
| %SOC used | 100 | 1 | 100 | 2 |
| Total Energy | 138 kWh | | 140 kWh | |
| Driving time | 7 hours | | 8 hours | |
| Average Energy Consumption | 17.5 kWh per hour | | 17.5 kWh per hour | |
| Average Recuperation | 8 kWh per hour | | 8 kWh per hour | |
| Range | ~260 km | | 300 km | |

The left-hand column illustrates schematically FC **320** with damaged capacity (capacity loss equivalent to10kWh). The righthand column illustrates schematically the reconfiguration of SCeFC **100** to compensate for the damage of FC **320,** by allocating certain capacity (equivalent in the non-limiting illustrated case to 10kWh) to be operated similarly to FC module **320**. Advantageously, as FC **320** and SCeFC **100** are based on similar anode and cathode material, the conversion of available capacity is straightforward. Operation range **105** of SCeFC **100,** and possibly working point **115** thereof as well, may be adjusted to optimize operation of power train **300,** e.g., operation range **105** may be extended to compensate at least partly for the reduced capacity of SCeFC allocated to receive (and possibly provide) bursts of energy.

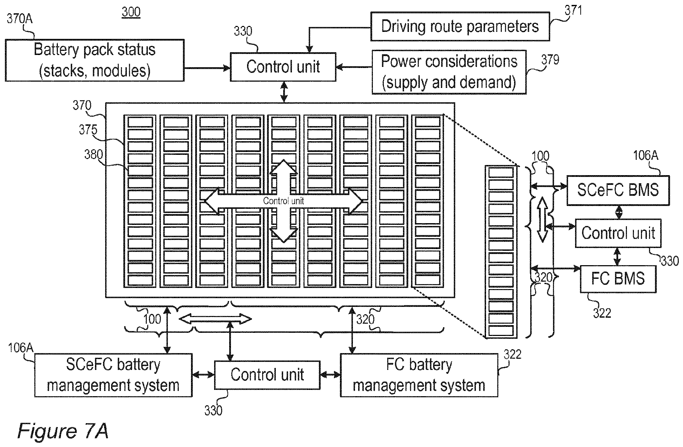

**Figure 7A** is a high level schematic illustration of power train **300** having FC and SCeFC modules **320, 100,** respectively, implemented in a single battery **370,** according to some embodiments of the invention. Battery **370** may comprise multiple internal modules **375,** each with multiple cell stacks **380.** Control unit **330** may be configured to manage an allocation of multiple internal modules **375** or even of cell stacks **380** to FC and SCeFC modules **320, 100,** respectively. It is noted that allocation and management refer to operating different internal modules **375** and/or cell stacks **380** according to different operation profiles and conditions, as characterized by FC and SCeFC modules **320, 100** disclosed herein.

As illustrated schematically in **Figure 7A,** internal modules **375** and/or cell stacks **380** may be allocated as belonging to FC and SCeFC modules **320, 100,** respectively, as indicated schematically by the illustrated brackets, with each of FC and SCeFC modules **320, 100** controlled by respective FC BMS **322** and SCeFC BMS **106A.** Control unit **330** may be configured to control FC BMS **322** and SCeFC BMS **106A** and power receipt and delivery profiles, as explained herein, as well as change the allocation of internal modules **375** and/or cell stacks **380** (illustrated schematically by the crossed double headed arrows) between FC and SCeFC modules **320, 100,** respectively, according to exceptional operation requirements (e.g., damage to some of cell stacks **380,** range extension requirement **350** etc.). Control unit **330** may be further configured to control allocation to FC and SCeFC modules **320, 100,** respectively, with respect to battery pack status parameters **370A** (e.g., relating to efficiency and operation of internal modules **375** and/or cell stacks **380**), driving route parameters **371** and related power considerations **379** (e.g., extended up-hill or down-hill driving sections with corresponding extended power requirements or extend power recuperation potential, respectively, distribution of charging stations along the route, expected power requirements associated with changing parameters such as weather, etc.). Re-allocation of internal modules **375** and/or cell stacks **380** between FC and SCeFC modules **320, 100,** respectively, may be carried out by control unit **330** as exception (e.g., in repair or emergency modes) or as regular adjustment of power train **300** to changing conditions.

In certain embodiments, control unit **330** may be further configured to manage allocation of elements of the single battery to FC **320** and SCeFC **100** and optionally to re-allocate elements of the single battery between FC **320** and SCeFC **100** according to operation parameters of the elements, and/or possibly to implement repair mode (compensation for damage to FC **320** by SCeFC **100**), range extension mode (addition of capacity to FC **320** from SCeFC **100**) etc., as disclosed above. In such embodiments control unit **330** may be configured to take over the respective BMSs of FC **320** and SCeFC **100** to form a single controller of the battery.

In certain embodiments, FC **320** and SCeFC **100** may be implemented in at least two corresponding separate batteries, managed by control unit **330** as disclosed above.

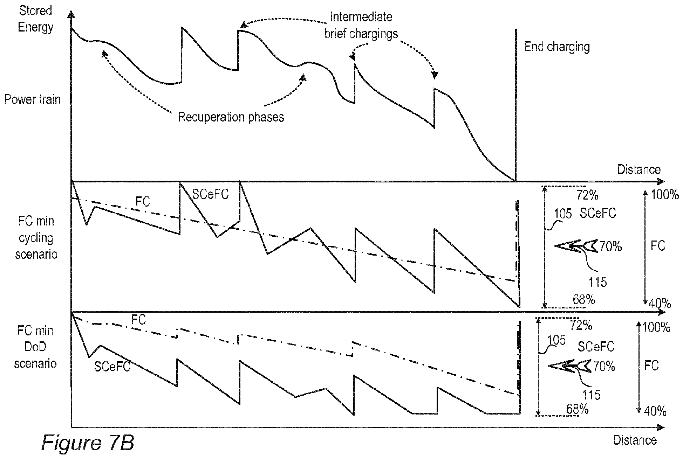

**Figure 7B** is an illustration of highly schematic power supply profiles, according to some embodiments of the invention. The illustration is non-limiting and schematic, and relates in a general manner a power profile of the EV along a drive, reflecting the changes in stored energy in power train **300** along the driven distance (top graph) and two scenarios for splitting the power profile of power train **300** between FC **320** and SCeFC **100,** using different considerations as guiding principles (two bottom graphs, showing FC and SCeFC stored energy separately and schematically). It is emphasized that control unit **330** may be configured to implement any splitting scenario between FC **320** and SCeFC **100** as well as to switch between scenarios during operation, according to various considerations (e.g., battery pack(s) status parameters **370A,** driving route parameters **371,** power considerations **379** etc.).

In the illustrated example (top graph), the general downwards trend of the stored energy reflects energy use by the EV, with intermittent brief charging periods, e.g., at charging stations. The slope of the energy use profile depends on energy demands of the EV (depending on the driving route and supplemental needs of the EV) and changes along the travelled distance, with intermittent periods of power recuperation which make the slope milder or even reverse the power profile into net power regeneration occasionally.

Allocation of SCeFC **100** and FC **320** to power supply and power receipt may be carried out in various scenarios, of which two are presented - a first scenario (middle graph) in which FC **320** is operated continuously at a constant slope to minimize its cycling, with power fluctuations (resulting from charging, recuperation and high demand, illustrated schematically) buffered by SCeFC **100;** and a second scenario (bottom graph) in which FC **320** is operated to minimize its DoD and is periodically charged, while SCeFC **100** is operated as much as necessary to minimize the need to drain power from FC **320.** Corresponding to these scenarios, schematic fluctuations in energy stored in SCeFC **100** and FC **320** are illustrated to represent schematically power supply and demand allocation form either source by control unit **330.** Clearly in various implementations details may be modified. In the illustrated example, SCeFC **100** is shown to be operated at $\pm2\%$ operation range **105** around 70% lithiation as working point **115,** without loss of generality. It is noted that both scenarios, SCeFC **100** handles most power (provision and receipt) bursts, using its high cyclability, and is characterized by a much higher charging and discharging C rate.

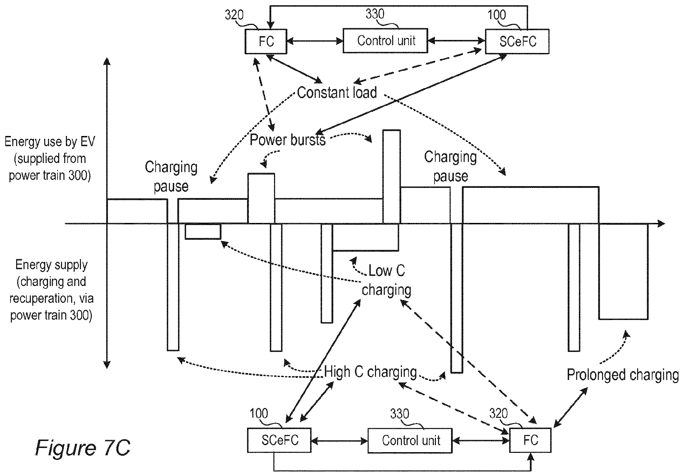

**Figure 7C** is a conceptual illustration of power supply and demand allocation by control unit **330** between SCeFC **100** and FC **320,** according to some embodiments of the invention. Energy use by the EV, supplied from power train **300,** is typically characterized by relatively constant load periods, which require quite constant power supply of large energy amounts, and power burst periods, which require smaller amounts of energy but at higher discharging rates (bursts). Control unit **330** may be configured to optimize the use of FC **320** and SCeFC **100** with respect to their typical C rates and cyclability, e.g., allocate FC **320** to provide constant loads and allocate SCeFC **100** to provide burst power on top of the constant load. Alternatively or complementarily, SCeFC **100** may be configured to provide as much power as available from it, with FC **320** being used mainly when SCeFC is exhausted. Energy supply to power train **300** typically comprises charging power bursts, e.g., in brief stops for charging, which require high C rate charging, and possibly low C charging periods of energy recuperation (e.g., on down-hill drives, and upon operation of brakes). Control unit **330** may be configured to receive power primarily by SCeFC **100,** to reduce cycling of FC **320,** and/or to partly charge FC **320** to reduce its DoD. Both SCeFC **100** and FC **320** may be charged during prolonged charging periods, e.g., following a drive, at night, etc. The allocation of charged energy to SCeFC **100** and FC **320** may be controlled by control unit **330** with respect to various parameters, including the state of the battery pack(s) and required power storage for future parts of the driving route, including possibly re-allocation of battery modules between SCeFC **100** and FC **320** (see e.g., **Figure 7A**).

In certain embodiments, SCeFC **100** and FC **320** may interface with the EV along lines disclosed in U.S. Application No. 15/678,143, namely with SCeFC **100** configured to be charged and discharge via existing EV power connections, without requirement for higher power electronics, e.g., upon configuration of SCeFC to receive and provide limited amounts of energy which correspond to specifications of the given EV power electronics. In other embodiments however, the power provision circuitry may be configured to support high power transfer to enhance the benefits of using SCeFC **100** and to enhance power recuperation.

**Figure 8** is a schematic flowchart illustrating a method of emulating a supercapacitor by a fast-charging battery and using the emulated supercapacitor in the power train of the electric vehicle, according to some embodiments of the invention. Method **200,** as illustrated schematically in **Figure 8**, may comprise emulating a supercapacitor with given specifications by a fast-charging battery (stage **205**), e.g., to yield SCeFC **100,** by configuring the fast-charging battery to emulate the supercapacitor with respect to specified requirements (stage **210**), for example by configuring physical dimensions of the battery to provide the required specifications (stage **220**), determining charging/discharging rate of the battery (stage **225**) and/or determining the working point and the partial operation range of the battery (stage **230**). Method **200** may further comprise configuring the control circuitry of the battery to provide the required performance (stage **240**).

Method **200** may further comprise selecting the working point within an optimal operation window (stage **250**), possibly selecting the working point as a highly lithiated point within the optimal operation window to reduce relative expansion of the anode material particles during operation (stage **255**).

Method **200** may further comprise modifying the battery to further enhance its performance within the operation range (stage **260**), e.g., by optimizing the anode configuration under assumption of operation only around the working point and within the operation range (stage **265**) - see e.g., **Figures 6**, and **Figure 9B** below.

Method **200** may further comprise configuring a power train for an electric vehicle from a fast-charging lithium ion battery module (FC), configured to deliver power to the electric vehicle, for example as the main source of power, and a supercapacitor-emulating fast-charging lithium ion battery module (SCeFC), configured to receive power (e.g., charged into the power train and/or recuperated from the EV) and to deliver power to the FC (stage **400**), wherein both the FC and the SCeFC have anodes with the same anode active material (e.g., Si, Ge and/or Sn -based anode active material, LTO-based anode material etc.) and wherein the SCeFC is configured to operate at a maximal charging rate of 5C and within an operation range of 5% at most around a working point of between 60-80% lithiation of the anode active material. Method **200** may further comprise operating the SCeFC battery to receive recuperated power from the electric vehicle and deliver power to the FC and operating the FC to deliver power to the electric vehicle (stage **410**).

In certain embodiments, method **200** may comprise any of maintaining the state of charge (SoC) of the SCeFC within the operation range around the working point (stage **420**), managing the FC and the SCeFC with respect to power delivery to and from the electric vehicle, respectively (stage **430**), and managing power delivery from the SCeFC to the FC according to specified criteria that minimize the depth of discharge (DoD) of the FC (stage **440**).

In certain embodiments, method **200** may further comprise allocating at least a part of the SCeFC to complement operation of the FC when the FC experiences reduced capacity (stage **450**), wherein the allocation is carried out by increasing the operation range of the SCeFC (stage **455**), and possibly extending the operation range of the SCeFC in exceptional situations to compensate for power drainage and/or damage to the FC. In certain embodiments, method **200** may further comprise configuring the SCeFC to deliver power bursts to power to the electric vehicle, to minimize the DoD of the FC (stage **460**). Method **200** may further comprise minimizing the operation range of the SCeFC and maximizing cycling of the SCeFC with respect to the cycling of the FC (stage **465**).

It is noted that the control unit may be further configured to minimize a depth of discharge (DoD) of the FC and/or to minimize a number of cycles of the FC. Method **200** may be implemented on battery modules which may be based on any of Si, Ge, Sn and/or LTO.

In certain embodiments, method **200** may further comprise operating the SCeFC as main burst receiver (e.g., high C charged power, recuperated energy etc.) and main burst provider (e.g., supplying required power bursts at high C rate) and operating the FC as main constant load supplier (stage **470**). Method **200** may further comprise managing power supply from the SCeFC and the FC with respect to load characteristics such as load constancy and burst parameters (stage **475**).

Method **200** may further comprise implementing the FC and the SCeFC in a single battery (stage **480**) and/or managing internal modules and cell stacks with respect to their allocation to the FC and the SCeFC (stage **485**) and/or possibly re-allocating internal modules and cell stacks to the FC and the SCeFC (stage **490**), according to performance requirements such as driving route parameters, power considerations, operation parameters of the battery elements etc.

In certain embodiments, method **200** may further comprise implementing the FC and SCeFC in at least two corresponding separate batteries.

In certain embodiments, anode configuration optimization **265** may further comprise configuring the anode active material to enable operation of the SCeFC only around the working point and within the operation range and/or possibly selecting the working point within an optimal operation window of the SCeFC as a highly lithiated point to reduce relative expansion of anode material particles during operation - all with respect to operating SCeFC in power train **300** of the electric vehicle.

Any part(s) of method **200** may be implemented in computer program product(s) which may be incorporated in any of power train control unit **330** and/or in BMSs **322** and/or **106A.**

Some methods according to the invention may be implemented by suitable control of known power sources. For example some embodiments of the invention may comprise a computer readable medium comprising instructions which, when implemented on a processor of a computer, cause the computer to control a power source or power train according to any of the methods described herein. The computer readable medium may be transitory or non-transitory, e.g. in the form of stored instructions. For example certain embodiments comprise a computer program product comprising a non-transitory computer readable storage medium having computer readable program embodied therewith, the computer readable program configured to operate a SCeFC battery to receive recuperated power from an electric vehicle and deliver power to a FC and operate the FC to deliver power to the electric vehicle, wherein a power train of the electric vehicle comprises the FC as main power supplier and the SCeFC as main power receiver, both the FC and the SCeFC have anodes with Si, Ge, Sn and/or LTO-based anode active material, and wherein the SCeFC is configured to operate at 5C at least and within an operation range of 5% at most around a working point of between 60-80% lithiation of the anode material, which may comprise Si, Ge, Sn and/or LTO-based anode active material. The computer program product may further comprise computer readable program configured to operate the SCeFC at 5C at least and within an operation range of 5% at most around a working point of between 60-80% lithiation of the anode active material.

In certain embodiments, the computer program product may further comprise computer readable program configured to maintain a state of charge (SoC) of the SCeFC within the operation range around the working point, manage the FC and the SCeFC with respect to power delivery to and from the electric vehicle, respectively, and manage power delivery from the SCeFC to the FC according to specified criteria that minimize a depth of discharge of the FC.

In certain embodiments, the computer program product may further comprise computer readable program configured to allocate at least a part of the SCeFC to complement operation of the FC when the FC experiences reduced capacity, wherein the allocation is carried out by increasing the operation range of the SCeFC. In certain embodiments, the computer program product may further comprise computer readable program configured to select the working point within an optimal operation window of the SCeFC as a highly lithiated point to reduce relative expansion of anode material particles during operation.

Certain embodiments comprise computer program product comprising a non-transitory computer readable storage medium having computer readable program embodied therewith, the computer readable program configured to operate a power train of an electric vehicle (EV), the power train comprising a main fast-charging lithium ion module (FC), configured to deliver power to the EV, and a supercapacitor-emulating fast-charging lithium ion module (SCeFC), configured to receive power and to deliver power to the EV and/or to the FC, wherein both the FC and the SCeFC have anodes based on a same anode active material, and wherein the SCeFC is configured to operate at least at a maximal charging rate of 5C and within an operation range of 5% at most around a working point of between 60-80% lithiation of the anode active material, wherein the computer readable program comprises: computer readable program configured to operate the SCeFC battery to maintain a state of charge (SoC) of the SCeFC within the operation range around the working point, computer readable program configured to manage the FC and the SCeFC with respect to power delivery to and from the EV, respectively, and computer readable program configured to manage power delivery from the SCeFC to the FC and/or to the EV according to specified criteria. Implementation of any of the computer readable programs may be configured according to the principles, scenarios and control configurations disclosed herein.

Modified fast-charging batteries **100A** may comprise improved anodes and cells, which enable fast charging rates with enhanced safety due to much reduced probability of metallization of lithium on the anode, preventing dendrite growth and related risks of fire or explosion. Anodes and/or electrolytes may have buffering zones for partly reducing and gradually introducing lithium ions into the anode for lithiation, to prevent lithium ion accumulation at the anode electrolyte interface and consequent metallization and dendrite growth. Various anode active materials and combinations, modifications through nanoparticles and a range of coatings which implement the improved anodes are provided. The electrolyte in the cell may be chosen to further reduce the accumulation rate of lithium ions at the interface, while maintaining the lithiation in the anode material is the rate limiting factor.

**Figure 9A** is a schematic illustration of various anode configurations, according to some embodiments of the invention. **Figure 9A** illustrates schematically, in a non-limiting manner, a surface of anode **108,** which may comprise anode active material particles **110** (e.g., particles of metalloids such as silicon, germanium and/or tin, and/or of aluminum), and/or possibly composite core-shell particles **110B,** at different sizes (e.g., in the order of magnitude of 100nm, e.g., 100-500nm, and/or possible in the order of magnitude of 10nm or $1\mu$) - for receiving lithiated lithium during charging and releasing lithium ions during discharging. Anodes **108** may further comprise binder(s) and additive(s) **102** as well as optionally coatings **130** (e.g., conductive polymers **130A** with or without lithium, conductive fibers **130B** such as CNTs (carbon nanotubes) or carbon fibers). Active material particles **110** may be pre-coated by one or more coatings **120** (e.g., by conductive polymers, lithium polymers, etc.), have borate and/or phosphate salt(s) **128** bond to their surface (possibly forming e.g., $B_2O_3$, $P_2O_5$), bonding molecules **180** (illustrated schematically) which may interact with electrolyte **85** (and/or ionic liquid additives thereto) and/or various nanoparticles **112** (e.g., $B_4C$, WC, VC, TiN) (forming modified anode active material particles **110A**), may be attached thereto in anode preparation processes **111** such as ball milling (see, e.g., U.S. Patent No. 9,406,927), slurry formation, spreading of the slurry and drying the spread slurry. For example, anode preparation processes **111** may comprise mixing additive(s) **102** such as e.g., binder(s) (e.g., polyvinylidene fluoride, PVDF, styrene butadiene rubber, SBR, or any other binder), plasticizer(s) and/or conductive filler(s) with a solvent such as water or organic solvent(s) (in which the anode materials have limited solubility) to make an anode slurry which is then dried, consolidated and is positioned in contact with a current collector (e.g., a metal, such as aluminum or copper). Details for some of these possible configurations are disclosed below.

In certain embodiments, modified fast-charging batteries **100A** may be optimized for operation in device **100** by application of modifications **260** with respect to fast-charging batteries which are operated over their full (nominal) operation range. For example, battery **100A** may be modified (**260**) to further enhance its performance within the operation range, e.g., by optimizing the anode configuration under assumption of operation only around the working point and within the operation range. For example, the anode material particles may be larger and/or more densely distributed in anodes **108** configured to operate only around the working point and within the operation range.

It is explicitly noted that in certain embodiments, cathodes may be prepared according to disclosed embodiments. For example, in cells **100A** (of modified fast-charging batteries **100A,** both designated by numerals **100A** without limiting the scope of the invention to either) configured to provide both fast charging and fast discharging, the anode or both electrodes **108**, **87** may be prepared according to embodiments of the disclosed invention.

Anode material particles **110, 110A, 110B,** anodes **108** and cells **100A** may be configured according to the disclosed principles to enable high charging and/or discharging rates (C-rate), ranging from 3-10 C-rate, 10-**100** C-rate or even above **100C**, e.g., 5C, 10C, 15C, 30C or more. It is noted that the term C-rate is a measure of the rate of charging and/or discharging of cell/battery capacity, e.g., with 1C denoting charging and/or discharging the cell in an hour, and XC (e.g., 5C, 10C, 50C etc.) denoting charging and/or discharging the cell in 1/X of an hour - with respect to a given capacity of the cell.

In certain embodiments, anode **108** may comprise conductive fibers **130B** which may extend throughout anode **108** (illustrated, in a non-limiting manner, only at a section of anode **108**) interconnect cores **110** and interconnected among themselves. Electronic conductivity may be enhanced by any of the following: binder and additives **102,** coatings **130A,** conductive fibers **130B,** nanoparticles **112** and pre-coatings **120,** which may be in contact with electronic conductive material (e.g., fibers) **130.**

Lithium ion cell **100A** comprises anode(s) **108** (in any of its configurations disclosed herein) made of anode material with composite anode material such as any of anode material particles **110**, **110A, 110B,** electrolyte **85** and at least cathode **87** delivering lithium ions during charging through cell separator **86** to anode **108.** Lithium ions (Li$^+$) are lithiated (to Li$^{~0l}$, indicating substantially non-charged lithium, in lithiation state) when penetrating the anode material, e.g., into anode active material cores **110** (possibly of core-shell particles **110B**). Any of the configurations of composite anode material and core-shell particles **110B** presented below may be used in anode **108,** as particles **110B** are illustrated in a generic, non-limiting way. In core-shell particle configurations **110B,** the shell may be at least partly provided by coating(s) **120,** and may be configured to provide a gap **140** for anode active material **110** to expand **101** upon lithiation. In some embodiments, gap **140** may be implemented by an elastic or plastic filling material and/or by the flexibility of coating(s) **120** which may extend as anode active material cores **110** expand and thereby effective provide room for expansion **101,** indicated in **Figure 9A** schematically, in a non-limiting manner as gap **140.** Examples for both types of gaps **140** are provided below, and may be combined, e.g., by providing small gap **140** and enabling further place for expansion by the coating flexibility.

Examples for electrolyte 85 may comprise liquid electrolytes such as ethylene carbonate (EC), diethyl carbonate (DEC), propylene carbonate (PC), fluoroethylene carbonate (FEC), ethyl methyl carbonate (EMC), dimethyl carbonate (DMC), vinylene carbonate (VC), possibly tetrahydrofuran (THF) and/or its derivatives, and combinations thereof and/or solid electrolytes such as polymeric electrolytes such as polyethylene oxide, fluorine-containing polymers and copolymers (e.g., polytetrafluoroethylene), and combinations thereof. Electrolyte 85 may comprise lithium electrolyte salt(s) such as $LiPF_6$, $LiBF_4$, lithium bis(oxalato)borate, $LiN(CF_3SO_2)_2$, $LiN(C_2F_5SO_2)_2$, $LiAsF_6$, $LiC(CF_3SO_2)_3$, $LiClO_4$, LiTFSI, $LiB(C_2O_4)_2$, $LiBF_2(C_2O_4)$, tris(trimethylsilyl)phosphite (TMSP) and combinations thereof. Ionic liquid(s) may be added to electrolyte 85 as disclosed below. Additive(s) (e.g., at few %wt) may comprise tris(trimethylsilyl)phosphite (TMSP), tris (trimethylsilyl) borate (TMSB), lithium difluoro(oxalato)borate (LiFOB), succinic anhydride, trimethyl phosphate (TMP) and triphenyl phosphate (TFP), fluorinated solvents (methyl nonafluorobutyl ether (MFE), and combinations thereof. Ionic liquid(s) may be added to electrolyte 85 as disclosed below.

In certain embodiments, cathode(s) 87 may comprise materials based on layered, spinel and/or olivine frameworks, and comprise various compositions, such as LCO formulations (based on $LiCoO_2$), NMC formulations (based on lithium nickel-manganese-cobalt), NCA formulations (based on lithium nickel cobalt aluminum oxides), LMO formulations (based on $LiMn_2O_4$), LMN formulations (based on lithium manganese-nickel oxides), LFP formulations (based on $LiFePO_4$), lithium rich cathodes, and/or combinations thereof. Separator(s) 86 may comprise various materials, such as polyethylene (PE), polypropylene (PP) or other appropriate materials. Possible compositions of anode(s) 100 are disclosed below in detail.

Examples for bonding molecules 180 may comprise e.g., lithium 3,5-dicarboxybenzenesulfonate, lithium sulfate, lithium phosphate, lithium phosphate monobasic, lithium trifluoromethanesulfonate, lithium 1,1,2,2,3,3,4,4,5,5,6,6,7,7,8,8,8-heptadecafluorooctane-1-sulfonate, lithium 2,6-dimethylbenzene-1,4-disulfonate, lithium 2,6-di-*tert*-butylbenzene-1,4-disulfonate, 3,3'-((1,2-dithiane-4,5-diyl)bis(oxy))bis(*N*-hydroxypropanamide), 3,3'-((4-mercapto-1,2-phenylene)bis(oxy))bis(*N*-hydroxypropanamide), lithium aniline sulfonate (the sulfonate may be in any of para, meta and ortho positions) as well as poly(lithium-4-styrenesulfonate), as well as related molecules derived therefrom by various substitutions and modifications, provided as some non-limiting examples.

In **Figure 9A,** the different configurations are illustrated schematically in different regions of the anode surface, yet embodiments may comprise any combinations of these configurations as well as any extent of anode surface with any of the disclosed configurations. Anode(s) 108 may then be integrated in cells 100A which may be part of lithium ion batteries, together with corresponding cathode(s) 87, electrolyte 85 and separator 86, as well as other battery components (e.g., current collectors, electrolyte additives - see below, battery pouch, contacts, and so forth).

In certain embodiments, batteries 100A may be modified to comprise mechanical barriers configured to prevent full expansion of the anode material upon lithiation. For example, such mechanical barriers may be configured to enable 80% or less of the full expansion of the anode material upon lithiation. In certain embodiments, the anode material may comprise composite anode material particles 110B (see, e.g., **Figures 9A, 9B**) having shell structures which are smaller (provide a smaller expansion volume) than a full expansion volume of cores of the composite anode material particles. In certain embodiments, cathode(s) 87 of modified fast-charging lithium ion battery 100A may be designed to have a smaller capacity than anode(s) 108, as the cathodes are required to provide a smaller amount of lithium ions when battery 100A operates only within narrow operation range 105.

**Figure 9B** is a high level schematic illustration of partial lithiation and mechanical barriers for lithiation of the anode material particles, according to some embodiments of the invention. Fast-charging lithium ion battery 100A may have e.g., Si, Ge, Sn and/or LTO-based anode active material and be designed to operate at 5C at least and within operation range 105 of 5% at most around working point 115 of between 60-80% lithiation of the anode active material. **Figure 9B** illustrates schematically a small section 108A of anode 108 with composite particles 110B, which are depicted in a noon-limiting manner as "yolk and shell" particles comprising anode material particles 110 as cores ("yolks") internally attached to coating(s) 120 ("shells") and having gap 140 for expansion 101 due to lithiation during formation and charging.

In prior art use of lithium ion batteries, illustrated schematically by small section 108B, anode material particles 110 are being fully lithiated during formation and charging in operation (e.g., 100% SoC, 95% or 99% SoC, certain voltage level or minimal voltage change indication full lithiation etc. as various used indicators of full charging). Shells 120A are correspondingly configured (e.g., in a formation process step) to provide gap 140 sufficient to accommodate the full expansion under lithiation of anode material particles 110.

In contrast, some embodiments may implement partial lithiation to obtain working point 115 illustrated schematically by small section 108C. For example, a formation process may be applied to configure composite particles 110B to have partly lithiated anode material particles 110 (e.g., with working point 115 being any of 60%, 80% or intermediate lithiation states, e.g., in terms of SoC). Operation of battery 100A may then be carried out only within operation range 105 around working point 115, e.g., ±1% SoC (alternatively, as disclosed herein, ±2%, ±0.5%, ±5%, ±0.1%, or intermediate operation ranges 105 as non-limiting examples). A remaining gap 140A may be configured to serve various purposes such as any of (i) enhancing ionic and/or electronic conductivity to cores 110 by an appropriate filling material, (ii) maintaining contact of cores 110 with shells 120 (e.g., by elastic filling material that is compressed during formation), (iii) supporting the mechanical stability of anode **108** and/or the contact among composite particles **110B** and so forth.

Alternatively or complementarily, some or all composite particles **110B** may be configured with smaller gaps **140B** to form mechanical barriers (structural limitations) on the possible expansion **101** of cores **110**. As illustrated schematically in section **108D**, full lithiation of cores **110** may yield an expansion volume **113** (e.g., typically up to 300% in Si as anode material); shells **120B** may be configured (e.g., as in a given structure and/or in a formation step designed for this purpose) to be smaller than maximum-lithiation expansion volume **113** (e.g., any of 60%, 80% thereof, or any intermediate value, in terms of volume). As illustrated schematically by small section **108E**, composite particles **110B** may comprise anode material particles **110** in shells **120B** which have a smaller volume than shells **120**, prohibiting full lithiation of cores **110**. Accordingly, gaps **140B** in non-lithiated state of cores **110** may be smaller than prior art gaps **140** designed to accommodate full lithiation.

Shells **120B** may be configured according to working point **115** and operation range **105**, to accommodate just the maximal partial lithiation to which anode **108** and battery **100A** are designed, as illustrated schematically by small section **108F**.

It is emphasized that gaps **140, 140A, 140B** may be implemented by an elastic or plastic filling material in shells **120** and/or implemented by the flexibility of coating(s) **120** (coating **120** may be configured to extend as anode active material particles **110** expand, to provide room for expansion **101**).

While contrary to prior art configuration, and counterintuitive in the sense that the potential capacity of the anode material is being severely limited already in the design of battery **100A**, the inventors have found out that for the supercapacitor emulation applications disclosed herein, designs such as illustrated in section **108F** with shells **120B** smaller than maximum-lithiation expansion volume **113** of anode material particles **110** are advantageous in the sense that they enable more efficient use of space (by avoiding gaps **140A**) and result in higher volumetric capacity and higher instantaneous current inputs and outputs which are important in supercapacitor emulating batteries **100A** and devices **100,** as disclosed herein.

**Figures 10A-10C** are high level schematic illustrations relating to the selection of working point **115** and narrow operation range **105**, according to some embodiments of the invention. **Figures 10A, 10B** illustrate schematically charging and discharging graphs, respectively and **Figure 10C** illustrates an example for an optimal working window for selecting working point **115**, and illustrates an example for considerations for selecting working point **115**.

As illustrated schematically in **Figures 10A-10C**, around working point **115** and narrow partial operation range **105** may be determined (**230**) at different locations on either of charging and discharging curves (**Figures 10A and 10B**, respectively) according to various considerations. Moreover, modified battery **100A** may be re-configured with respect to the determined working point **115** and narrow partial operation range **105** to improve the performance of device **100** even further. In such case, modified battery **100A** may no longer be capable of exhibiting full charging and discharging ranges as the unmodified lithium ion battery, yet still may be operated within narrow range **105** of its potential capacity. For example, anode material particles **110** may be made of Si which expands by up to 300% upon lithiation, yet modified battery **100A** may be operated by control unit **106** only in narrow range **105** which results in a much narrower range of physical expansion upon lithiation. As a result, modified battery **100A** may be designed to provide less means for coping with expansion **101** of anode material particles **110** and as a consequence may be designed to have a larger volumetric capacity than a regular lithium ion battery configured to operate over the full charging and discharging range.

**Figure 10C** illustrates an example for an optimal working window for selecting working point **115,** and non-limiting selection considerations, according to some embodiments of the invention. The graph illustrates, in a non-limited manner, and example for the normalized anode DC (direct current) resistance performance as function of the state of charge (SoC) and provides the optimal working range for modified battery **100A** as the SoC range with low resistance, in which working point **115** and operation range **105** may be selected (indicated schematically by sets of an ornate arrow indicating working point **115** and a double-headed arrow indicating the operation range **105**).

**Figure 10C** further illustrates schematically anode material particles having anode material cores **110** and coating **120** at two ends of the optimal working window, namely at lower and higher lithiation states at the left-hand and right-hand sides thereof (with Li$^{\sim 0l}$ indicating the higher lithiation state). Expansion **101** is indicated schematically, in an exaggerated manner, for narrow operation range **105** in each case. In the lower lithiation state (e.g., 20-30% lithiation) the volume change of anode material particle **110** with respect to the size of anode material particle **110** (its relative expansion) is larger than the volume change of anode material particle **110** with respect to the size of anode material particle **110** (its relative expansion) in the higher lithiation state (e.g., 70-80% lithiation), because anode material particle **110** themselves are larger due to the higher level of lithiation. This effect may be significant in metalloid-based anode material such as Si, Ge, Sn and/or LTO, which expand by 100-500% or more upon lithiation (e.g., Si 400%, Ge 270% and Sn 330%). In certain embodiments, working point **115** may be selected at a lithiated state of the anode material in which the anode material particles are expanded, so that the additional expansion due to further charging is relatively small. In certain embodiments, anode material lithiation at working point **115** may be e.g., 60-80%, such as at 60%, 70%, 80% lithiation or at similar values. The inventors have found out that as modified battery **100A** is operated only over operation range **105,** its design may be optimized for its specific operation specifications.

In certain embodiments, anode modifications **260** may comprise enhancing ionic and/or electronic transport kinetics and conductivity, e.g., by various elements disclosed in **Figure 9A** such as ionic-conducting coatings and conductive additives. In addition to the amount of active material discussed above, also anode parameters such as thickness and porosity may be modified to increase the capacity and the conductivity (and thereby the C rate) and enhance the operation of modified battery **100A** within operation range **105** around working point **115**. In certain embodiments, cathode **87** and/or electrolyte **85** may also be modified to enhance operation of modified battery **100A** within operation range **105** around working point **115**.

In certain embodiments, as operation range **105** is restricted with respect to lithium ion batteries which are used over the whole operation range, battery **100A** may be configured to have smaller cathode(s) **87,** e.g., thinner cathode(s) **87,** cathode(s) **87** with a smaller area, etc., having a smaller capacity than anode(s) **108**. In certain embodiments, cathode(s) **87** may have a charge capacity which is smaller than the charge capacity of anode(s) **108** by e.g., 10%, 20%, 30% or even 40%. For example, cathode(s) **87** may have a capacity of 90%, 80%, 70%, 60%, respectively, of the capacity of anode(s) **108**. These differences may be with respect to pristine cathodes and anodes, and/or with respect to cathodes and anodes in operation. It is noted that as some of the cathode lithium is absorbed in the SEI (solid electrolyte interphase) during the formation process, a required operational cathode-anode load ratio may be implemented as a larger cathode-anode load ratio of the pristine electrodes. As operation range **105** is set to be smaller, the cathode-anode load ratio may also be smaller, requiring smaller cathodes.

Advantageously, disclosed fast-charging battery **100A** and/or devices **100** do not only emulate supercapacitors to provide comparable or better performance, but are also superior to equivalent supercapacitors in having lower self-discharge rates, higher working potentials, shorter charging times and higher energy densities than comparable supercapacitors.

For example, fast-charging battery **100A** typically provide an average output voltage level above 3V (e.g., 3.35V averaged from 4.3V to 2V) while supercapacitors are typically specified at 2.7V output voltage or even less, which moreover decays with self-discharge of the supercapacitor. Fast-charging batteries **100A** and/or devices **100** therefore provide a wider usable voltage range that broadens the operating margin for designers using them, with respect to using equivalent supercapacitors.

Moreover, operating fast-charging batteries **100A** and/or devices **100** may be configured to provide a very stable output voltage which is beneficial in many product designs. Not only that fast-charging batteries **100A** provide most of their energy capacity at a stable voltage level (e.g., 3.35V), but they regulated operation within narrow operation range **105** around working point **115** enhances the constancy of the output (and/or input) operation voltage significantly. The very stable output voltage delivered by disclosed fast-charging batteries **100A** and/or devices **100** stands in stark contrast to equivalent supercapacitors which typically produce an output voltage that is linearly proportional to their charge (e.g., a supercapacitor fully charged to 3.3V delivers 3.3V at 100% charge but only 1.65V at 50% charge, which is below the level required by many processors and other devices.

It is also noted that the low levels of self-discharge of fast-charging batteries **100A** and/or devices **100** with respect to equivalent supercapacitors is advantageous in avoiding the over-design of power sources in systems using supercapacitors, required to compensate for supercapacitors' high losses. For example, in certain embodiments, fast-charging batteries **100A** and/or devices **100** may be configured to operate at a voltage level of at least 3V, and have a leakage current smaller than 0.1% of a respective maximal continuous current.

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram or portions thereof. For example control circuitry as described herein may comprise one or more such processors or computers.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram or portions thereof.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram or portions thereof.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the invention. The various appearances of "one embodiment", "an embodiment", "certain embodiments" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention may also be implemented in a single embodiment. Certain embodiments of the invention may include features from different embodiments disclosed above, and certain embodiments may incorporate elements from other embodiments disclosed above. The disclosure of elements of the invention in the context of a specific embodiment is not to be taken as limiting their use in the specific embodiment alone.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Accordingly, the scope of the invention should not be limited by what has thus far been described, but by the appended claims.

**Claims**

1. A device (100) comprising:

   control circuitry (106), and
   a modified fast-charging lithium ion battery (100A), wherein the modified fast-charging lithium ion battery comprises:

   at least one anode (108) having Si, Ge and/or Sn -based anode active material,
   at least one cathode (87), and
   a carbonate-based electrolyte with lithium electrolyte salt(s),
   wherein:

   the modified fast-charging lithium ion battery operates at least at 5C;
   the modified fast-charging lithium ion battery is controlled by the control circuitry to operate around a working point defined between 60-80% lithiation of the Si, Ge and/or Sn -based anode active material and within an operation range of 5% at most around the working point;
   the percentage of lithiation corresponds to a state of charge "SOC" of the modified fast-charging lithium ion battery;
   the control circuitry maintains the SOC of the modified fast-charging lithium ion battery within the operation range and around the working point;
   the anode active material is configured to restrict the operation of the modified fast-charging lithium ion battery to within the operation range around the working point; an anode of the modified fast-charging lithium ion battery comprises mechanical barriers configured to prevent full expansion of the anode material upon lithiation, and correspondingly the modified fast-charging lithium ion battery is not operable at SOC values above the operation range around the working point; and
   the anode material comprises composite anode material particles having shell structures, wherein the shell structures are smaller than a full expansion volume of cores of the composite anode material particles.

2. The device of claim 2, wherein the mechanical barriers mechanically restrict the expansion of the anode material beyond 80% of the full expansion of the anode material upon lithiation, limiting the maximal SOC to 80%.

3. The device of any preceding claim, wherein the at least one cathode of the modified fast-charging lithium ion battery has a capacity of 80% or less than the respective at least one anode.

4. The device of any preceding claim, configured to operate at a voltage level of at least 3V, and have a leakage current smaller than 0.1% of a respective maximal continuous current.

5. An electric vehicle "EV" power train comprising:

   a control unit,
   a fast-charging lithium ion module "FC", configured to deliver power to the EV, wherein the FC comprises at least one fast-charging lithium ion battery comprising:

   at least one anode having Si, Ge and/or Sn -based anode active material,
   at least one cathode, and
   a carbonate-based electrolyte with lithium electrolyte salt(s); and

   at least one device according to any preceding claim,

   wherein the modified fast-charging lithium ion battery of the device is a supercapacitor-emulating fast-charging lithium ion module "SCeFC", configured to receive power and to deliver power to the EV and/or to the FC,
   wherein the anodes of both the FC and the SCeFC are based on the same anode active material; and

   wherein the control unit is configured to:

   maintain a state of charge "SoC" of the SCeFC within the operation range around the working point,
   manage the FC and the SCeFC with respect to power delivery to and from the EV, respectively, and
   manage power delivery from the SCeFC to the FC and/or to the EV.

6. The EV power train of claim 5, wherein the control unit is further configured to minimize a depth of discharge "DoD" of the FC.

7. The EV power train of claim 5 or claim 6, wherein the control unit is further configured to minimize a number of cycles of the FC.

8. The EV power train of any of claims 5 to 7, wherein the anode active material is Si, Ge and/or Sn-based.

9. The EV power train of any of claims 5 to 8, wherein both FC and SCeFC, are implemented in a single battery, wherein the control unit is further configured to manage allocation of elements of the single battery to the FC and the SCeFC.

10. The EV power train of claim 9, wherein the control unit is further configured to re-allocate elements of the single battery between the FC and the SCeFC according to operation parameters of the elements.

11. The EV power train of claim any of claims 5 to 10, wherein the FC and SCeFC are implemented in at least two corresponding separate batteries.

12. The EV power train of any of claims 5 to 11, wherein the control unit is further configured to allocate at least a part of the SCeFC to complement operation of the FC when the FC experiences reduced capacity, wherein the allocation is carried out by increasing the operation range of the SCeFC.

**Patentansprüche**

1. Vorrichtung (100), umfassend:

Steuerschaltung (106) und

eine modifizierte Lithiumionen-Schnellladebatterie (100A), wobei die modifizierte Lithiumionen-Schnellladebatterie Folgendes umfasst:

mindestens eine Anode (108) mit aktivem Anodenmaterial auf Si-, Ge- und/oder Sn-Basis,
mindestens eine Kathode (87) und
einen Elektrolyt auf Carbonat-Basis mit Lithiumelektrolytsalz(en),

wobei:

die modifizierte Lithiumionen-Schnellladebatterie bei mindestens 5 °C betrieben wird;
die modifizierte Lithiumionen-Schnellladebatterie von der Steuerschaltung so gesteuert wird, dass sie um einen Arbeitspunkt betrieben wird, der zwischen 60 und 80 % Lithiierung des aktiven Anodenmaterials auf Si-, Ge- und/oder Sn-Basis und innerhalb eines Betriebsbereichs von höchstens 5 % um den Arbeitspunkt herum definiert ist;
der prozentuale Anteil der Lithiierung einem Ladezustand "SOC" der modifizierten Lithiumionen-Schnellladebatterie entspricht;
die Steuerschaltung den SOC der modifizierten Lithiumionen-Schnellladebatterie innerhalb des Betriebsbereichs und um den Arbeitspunkt hält;
das aktive Anodenmaterial dazu konfiguriert ist, den Betrieb der modifizierten Lithiumionen-Schnellladebatterie auf den Betriebsbereich um den Arbeitspunkt herum zu beschränken;
eine Anode der modifizierten Lithiumionen-Schnellladebatterie mechanische Barrieren umfasst, die dazu konfiguriert sind, eine vollständige Expansion des Anodenmaterials bei Lithiierung zu verhindern,
und dementsprechend die modifizierte Lithiumionen-Schnellladebatterie bei SOC-Werten oberhalb des Betriebsbereichs um den Arbeitspunkt herum nicht betriebsfähig ist; und
das Anodenmaterial Verbundanodenmaterialteilchen mit Schalenstrukturen umfasst, wobei die Schalenstrukturen kleiner als ein volles Expansionsvolumen von Kernen der Verbundanodenmaterialteilchen sind.

2. Vorrichtung nach Anspruch 2, wobei die mechanischen Barrieren die Expansion des Anodenmaterials bei Lithiierung über 80 % der vollständigen Expansion des Anodenmaterials hinaus mechanisch beschränken, wobei der maximale SOC auf 80 % begrenzt wird.

3. Vorrichtung nach einem der vorhergehenden Ansprüche, wobei die mindestens eine Kathode der modifizierten Lithiumionen-Schnellladebatterie eine Kapazität von 80 % oder weniger als die jeweilige mindestens eine Anode aufweist.

4. Vorrichtung nach einem der vorhergehenden Ansprüche, die dazu konfiguriert ist, bei einem Spannungspegel von mindestens 3 V betrieben zu werden und einen Leckstrom aufzuweisen, der kleiner als 0,1 % eines jeweiligen maximalen Dauerstroms ist.

5. Elektrofahrzeug(EV)-Antriebsstrang, umfassend:

eine Steuereinheit,
ein Lithiumionen-Schnelllademodul "FC", das dazu konfiguriert ist, das EV mit Energie zu versorgen, wobei das FC mindestens eine Lithiumionen-Schnellladebatterie umfasst, die Folgendes umfasst:

mindestens eine Anode mit aktivem Anodenmaterial auf Si-, Ge- und/oder Sn-Basis,
mindestens eine Kathode und
einen Elektrolyt auf Carbonat-Basis mit Lithiumelektrolytsalz(en); und
mindestens eine Vorrichtung nach einem der vorhergehenden Ansprüche,
wobei die modifizierte Lithiumionen-Schnellladebatterie der Vorrichtung ein superkondensatoremulierendes Lithiumionen-Schnelllademodul "SCeFC" ist, das dazu konfiguriert ist, Energie zu empfangen und Energie an das EV und/oder das FC zu liefern,
wobei die Anoden sowohl des FC als auch des SCeFC auf demselben aktiven Anodenmaterial basieren; und

wobei die Steuereinheit zu Folgendem konfiguriert ist:

Aufrechterhalten eines Ladezustands "SoC" des SCeFC innerhalb des Betriebsbereichs um den Arbeitspunkt herum,

Verwalten des FC und des SCeFC in Bezug auf die Energieabgabe an das bzw. die Energieabgabe von dem EV und

Verwalten der Energieabgabe von dem SCeFC an das FC und/oder an das EV.

**6.** EV-Antriebsstrang nach Anspruch 5, wobei die Steuereinheit ferner dazu konfiguriert ist, eine Entladetiefe "DoD" des FC zu minimieren.

**7.** EV-Antriebsstrang nach Anspruch 5 oder Anspruch 6, wobei die Steuereinheit ferner dazu konfiguriert ist, eine Anzahl von Zyklen des FC zu minimieren.

**8.** EV-Antriebsstrang nach einem der Ansprüche 5 bis 7, wobei das aktive Anodenmaterial auf Si, Ge und/oder Sn basiert.

**9.** EV-Antriebsstrang nach einem der Ansprüche 5 bis 8, wobei sowohl FC als auch SCeFC in einer Einzelbatterie implementiert sind, wobei die Steuereinheit ferner dazu konfiguriert ist, die Zuordnung von Elementen der Einzelbatterie zu dem FC und dem SCeFC zu verwalten.

**10.** EV-Antriebsstrang nach Anspruch 9, wobei die Steuereinheit ferner dazu konfiguriert ist, Elemente der Einzelbatterie zwischen dem FC und dem SCeFC gemäß Betriebsparametern der Elemente neu zuzuweisen.

**11.** EV-Antriebsstrang nach einem der Ansprüche 5 bis 10, wobei das FC und das SCeFC in mindestens zwei entsprechenden separaten Batterien implementiert sind.

**12.** EV-Antriebsstrang nach einem der Ansprüche 5 bis 11, wobei die Steuereinheit ferner dazu konfiguriert ist, mindestens einen Teil des SCeFC zuzuweisen, um den Betrieb des FC zu ergänzen, wenn das FC eine reduzierte Kapazität aufweist, wobei die Zuweisung durch Erhöhen des Betriebsbereichs des SCeFC ausgeführt wird.

**Revendications**

**1.** Un dispositif (100) comprenant:

un circuit de commande (106), et
une batterie au lithium ionique à charge rapide modifiée (100A), dans laquelle la charge rapide modifiée batterie lithium ion comprend:

au moins une anode (108) comportant un matériau actif d'anode à base de Si, Ge et / ou Sn,
au moins une cathode (87), et
un électrolyte à base de carbonate avec un (des) sel (s) d'électrolyte de lithium,

où:

la batterie au lithium ionique à charge rapide modifiée fonctionne à au moins 5 °C;
la batterie au lithium ionique à chargement rapide modifiée est contrôlée par le circuit de commande fonctionner autour d'un point de travail défini entre 60 et 80% de la lithiation du Si, du Ge et / ou du matériau actif d'anode à base de Sn et dans une plage de fonctionnement de 5% au maximum autour du point de travail;
le pourcentage de lithiation correspond à un état de charge "SOC" de la modification batterie lithium-ion à chargement rapide;
le circuit de commande maintient le SOC de l'ion lithium modifié à charge rapide batterie dans la plage de fonctionnement et autour du point de travail;
le matériau actif d'anode est configuré pour limiter le fonctionnement de la charge rapide modifiée batterie lithium-ion dans la plage de fonctionnement autour du point de travail;
une anode de la batterie lithium-ion à charge rapide modifiée comprend des éléments mécaniques des barrières configurées pour empêcher la pleine expansion du matériau anodique lors de la lithiation, et en conséquence, la batterie au lithium ionique à chargement rapide modifiée ne peut pas être utilisée à SOC, des valeurs supérieures à la plage de fonctionnement autour du point de travail; et

le matériau d'anode comprend des particules de matériau d'anode composites ayant une structure de coque, dans lesquelles les structures de coque sont plus petites qu'un volume à pleine expansion de noyaux des particules de matériau de l'anode composite.

2. Dispositif selon la revendication 2, dans lequel les barrières mécaniques limitent mécaniquement la dilatation du matériau anodique au-delà de 80% de la dilatation totale du matériau anodique lors de la lithiation, limitant le SOC maximal à 80%.

3. Dispositif selon l'une quelconque des revendications précédentes, dans lequel la au moins une cathode de la batterie au lithium ionique à charge rapide modifiée a une capacité de 80% ou inférieure à la au moins une anode respective.

4. Dispositif selon l'une quelconque des revendications précédentes, configuré pour fonctionner à un niveau de tension d'au moins 3 V et avoir un courant de fuite inférieur à 0,1 % d'un courant continu maximal respectif.

5. Un groupe motopropulseur «VE» de véhicule électrique comprenant:

une unité de contrôle,
un module lithium ion à charge rapide «FC», configuré pour alimenter le VE, dans lequel la FC comprend au moins une batterie lithium-ion à charge rapide comprenant:

au moins une anode ayant un matériau actif d'anode à base de Si, Ge et / ou Sn,
au moins une cathode, et
un électrolyte à base de carbonate avec un (des) sel (s) d'électrolyte de lithium; et
au moins un dispositif selon l'une quelconque des revendications précédentes,
dans lequel la batterie à ions lithium à charge rapide modifiée du dispositif est un supercondensateur émulant module lithium-ion à charge rapide «SCeFC», configuré pour recevoir de l'énergie et alimenter le VE et / ou le FC,
dans lequel les anodes du FC et du SCeFC sont basées sur la même matériel anode active; et

dans lequel l'unité de commande est configurée pour:

maintenir un état de charge «SoC» de la SCeFC dans la plage de fonctionnement autour du point de travail,
gérer le FC et le SCeFC en ce qui concerne la fourniture d'énergie vers et depuis le VE, respectivement, et
gérer la fourniture de puissance du SCeFC au FC et / ou au VE.

6. Groupe motopropulseur pour véhicule électrique selon la revendication 5, dans lequel l'unité de commande est en outre configurée pour minimiser un
profondeur de décharge "DoD" de la FC.

7. Groupe motopropulseur pour véhicule électrique selon la revendication 5 ou 6, dans lequel l'unité de commande est en outre configurée pour
minimiser un nombre de cycles de la FC.

8. Groupe motopropulseur pour véhicule électrique selon l'une quelconque des revendications 5 à 7, dans lequel le matériau actif d'anode est à base de Si, Ge et / ou Sn.

9. Groupe motopropulseur pour véhicules électriques selon l'une quelconque des revendications 5 à 8, dans lequel FC et SCeFC sont implémentés dans une seule batterie, l'unité de commande étant en outre configurée pour gérer l'attribution d'éléments de la batterie unique à FC et à la SCeFC.

10. Groupe motopropulseur pour véhicule électrique selon la revendication 9, dans lequel l'unité de commande est en outre configurée pour réaffecter des éléments de la batterie unique entre le FC et le SCeFC en fonction du fonctionnement
des paramètres des éléments.

11. Le groupe motopropulseur pour véhicule électrique selon l'une quelconque des revendications 5 à 10, dans lequel le FC et le SCeFC sont mis en oeuvre dans au moins deux batteries séparées correspondantes.

12. Groupe motopropulseur selon l'une quelconque des revendications 5 à 11, dans lequel l'unité de commande est en outre configurée pour allouer au moins une partie de la SCeFC afin de compléter le fonctionnement du FC lorsque le FC subit une capacité réduite, dans lequel l'attribution est effectuée par augmenter la plage de fonctionnement du SCeFC.

Figure 1A

EP 3 336 937 B1

Supercapacitor | 105 | Fast charging battery

90 — Whole device active each cycle | Fast charging · Full discharge · High current · $10^5$-$10^6$ cycles

Small partial operation range

Higher current and more cycles

Small part of device active each cycle — 100A

Control circuitry — 106

High self-discharge | Low self-discharge

210 — 220 — 100A

Requirement | Configuration:

90 — Same current (I) · Same physical dimensions (w, d)

Weight, Size C rate

Voltage

105 — 230

230 — 105

Time

Physical dimensions (w, d)

Charging/discharging time — 225

*Figure 1B*

31

Figure 2

*Figure 3A*

*Figure 3B*

Figure 3C

*Figure 4*

301
EV
302A
Vehicle systems
300
330
106A    301A          Charging
100                    controller
SCeFC         SCeFC    310          320
controller                          FC    FC
                                          controller

→← Control and sensing
⇨ Power transfer

301B    302B    301B
Vehicle systems (e.g., drive shaft)

## Figure 5A

340    359    Energy requirement

358                              350B
Y    SCeFC at bottom of    N    Supply power to EV
     operation range?           from SCeFC

301B                            Y    More power
Supply power to EV from FC           needed?
354                350         310    N    356
N    FC empty?    Y    Extend operation    Charge FC
                       range of SCeFC

301A    Charge SCeFC

341    Incoming energy

## Figure 5B

Figure 5C

360

361
Recuperation ability

362
Charge/discharge profile (pulse frequency) and/or Energy per cycle

365
Charge/discharge cycles

368
SCeFC and FC module sizes

367
SoC

## Figure 6A

301
Power source

341
Power bursts

100
SCeFC

330
Controller

310

359A
Burst load

359
Power load (e.g., drive)

320
FC

359B
Constant load

## Figure 6B

Figure 7A

Figure 7B

*Figure 7C*

200

Emulating a supercapacitor with given specifications by a fast-charging battery to yield an SCeFC ⟋205

Configuring the fast-charging battery to emulate the supercapacitor with respect to specified requirements ⟋210

Configuring physical dimensions of the battery to provide the required operation specifications ⟋220

Determining the charging/discharging rate of the battery ⟋225

Determining the working point and the partial operation range of the battery ⟋230

Configuring the control circuitry of the battery to provide the required performance ⟋240

Selecting the working point within an optimal operation window ⟋250

Selecting the working point as a highly lithiated point within the optimal operation window to reduce relative expansion in operation ⟋255

Modifying the battery to further enhance its performance within the operation range ⟋260

Optimizing anode configuration under assumption of operation only around the working point and within the operation range ⟋265

*Figure 8*

<u>200</u>

Configuring a power train for an electric vehicle (EV) from a main fast-charging lithium ion battery module (FC), configured to deliver power to the EV, and a supercapacitor-emulating fast-charging lithium ion battery module (SCeFC), configured to receive power and to deliver power to the FC and/or to the EV — 400

Operating the SCeFC module to receive recuperated power from the EV and deliver power to the FC; and operating the FC to deliver power to the EV — 410

Maintaining a state of charge (SoC) of the SCeFC within the operation range around the working point — 420

Managing the FC and the SCeFC with respect to power delivery to and from the electric vehicle, respectively — 430

Managing power delivery from the SCeFC to the FC according to specified criteria that minimize a depth of discharge (DoD) of the FC — 440

Allocating at least a part of the SCeFC to complement operation of the FC when the FC experiences reduced capacity — 450

Increasing the operation range of the SCeFC to compensate for FC capacity loss — 455

Configuring the SCeFC to deliver power bursts to power to the electric vehicle, to minimize the DoD of the FC — 460

*Figure 8 (Continued, 1.)*

200

Minimizing the operation range of the SCeFC and maximizing cycling of the SCeFC with respect to the cycling of the FC  ∼465

Operating the SCeFC as main burst receiver and provider and the FC as constant load supplier  ∼470

Managing power supply from the SCeFC and FC with respect to load characteristics such as load constancy and burst parameters  475

Implementing the SCeFC and FC in a single battery  480

Managing internal modules and cell stacks of a battery with respect to their allocation to SCeFC and FC  485

Re-allocating internal modules and/or cell stacks to SCeFC and/ or FC according to performance requirements  490

*Figure 8 (Continued, 2.)*

Figure 9A

*Figure 9B*

Figure 10A

Figure 10B

Figure 10C

**REFERENCES CITED IN THE DESCRIPTION**

**Patent documents cited in the description**

- US 2016264124 A
- US 2013059174 A
- WO 2016031082 A1
- US 9472804 B
- US 678143
- US 9406927 B